(19) **Europäisches Patentamt / European Patent Office / Office européen des brevets**

(11) **EP 4 380 299 A1**

(12) **EUROPEAN PATENT APPLICATION**
published in accordance with Art. 153(4) EPC

(43) Date of publication:
**05.06.2024 Bulletin 2024/23**

(21) Application number: **22849876.2**

(22) Date of filing: **27.07.2022**

(51) International Patent Classification (IPC):
$H04W\ 76/28^{(2018.01)}$  $H04W\ 72/04^{(2023.01)}$
$H04W\ 72/12^{(2023.01)}$  $H04W\ 52/02^{(2009.01)}$
$H04W\ 88/02^{(2009.01)}$

(52) Cooperative Patent Classification (CPC):
**H04W 52/02; H04W 72/04; H04W 72/12;
H04W 76/28; H04W 88/02**

(86) International application number:
**PCT/KR2022/011015**

(87) International publication number:
**WO 2023/008900 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.07.2021  KR 20210098741
06.08.2021  KR 20210103791**

(71) Applicant: **LG Electronics Inc.
Yeongdeungpo-gu
Seoul 07336 (KR)**

(72) Inventors:
- **HWANG, Seunggye**
  **Seoul 06772 (KR)**
- **KIM, Jaehyung**
  **Seoul 06772 (KR)**
- **BAE, Duckhyun**
  **Seoul 06772 (KR)**
- **YANG, Suckchel**
  **Seoul 06772 (KR)**

(74) Representative: **Plasseraud IP
66, rue de la Chaussée d'Antin
75440 Paris Cedex 09 (FR)**

(54) **METHOD AND DEVICE FOR TRANSMITTING AND RECEIVING WIRELESS SIGNALS IN WIRELESS COMMUNICATION SYSTEM**

(57)  A device operating on the basis of discontinuous reception (DRX) according to one example disclosed herein can: apply at least one of a plurality of offset sets received through upper-layer signaling to a DRX cycle, and thereby determine time resources at which each of DRX-On durations included in a specific time interval start; and monitor, in each of the DRD-On durations, a physical downlink control channel (PDCCH) including scheduling information related to a specific service.

**FIG. 13**

A1305 Receive DRX related Information

A1310 PDCCH monitoring on DRX-On Duration

A1315 Receive or Transmit based on Detected PDCCH

**Description**

**TECHNICAL FIELD**

The present disclosure relates to a wireless communication system, and more particularly, to a method and apparatus for transmitting and receiving a wireless signal.

**BACKGROUND**

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

**DISCLOSURE**

**Technical Problem**

An object of the present disclosure is to provide a method of efficiently performing wireless signal transmission/reception procedures and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

**Technical Solution**

According to an aspect of the present disclosure, provided herein is a method of a device for operating based on discontinuous reception (DRX) in a wireless communication system, including: receiving DRX-related information including a plurality of offset sets each having 'N' offsets through higher layer signaling; monitoring a physical downlink control channel (PDCCH) including scheduling information related to a specific service in each of DRX on-durations included in a specific time duration based on the DRX-related information; and receiving or transmitting a signal for data of the specific service based on the scheduling information detected as a result of monitoring the PDCCH. A DRX cycle included in the DRX-related information may be an integer. The device may determine respective time resources on which the DRX on-durations included in the specific time duration start by applying 'N' offsets of a specific set indicated through signaling different from the higher layer signaling, among the plurality offset sets included in the DRX-related information, to the DRX cycle. The determined time resources on which the DRX on-durations start may form a pattern repeated every specific time duration.

The data of the specific service may be periodic data, and a periodicity of the periodic data may be a rational number other than an integer.

Information related to the specific set may be received through downlink control information (DCI) or medium access control (MAC) signaling.

'N' may represent the number of time resources on which the DRX on-durations forming the pattern during the specific time duration start. 'N' may represent the number of the DRX on-durations included in the specific time duration.

The specific set applied to the DRX cycle may be related to at least one of a first offset, which is common to the DRX on-durations, or a second offset, which is individually configurable for each of the DRX on-durations.

The specific set applied to the DRX cycle may be determined based on the periodicity of the periodic data which is a rational number other than an integer.

The specific service may be an extended reality (XR) service.

A periodicity of the data may be related to frames per second (fps) of XR data.

In another aspect of the present disclosure, provided herein is a computer readable medium in which a program for performing the above-described operation method is recorded.

In another aspect of the present disclosure, provided herein is a device for wireless communication, including: a memory configured to store instructions; and a processor configured to perform operations by executing the instructions. The operations of the processor may include: receiving discontinuous reception (DRX)-related information including a plurality of offset sets each having 'N' offsets through higher layer signaling; monitoring a physical downlink control channel (PDCCH) including scheduling information related to a specific service in each of DRX on-durations included in a specific time duration based on the DRX-related information; and receiving or transmitting a signal for data of the specific service based on the scheduling information detected as a result of monitoring the PDCCH. A DRX cycle included in the DRX-related information may be an integer. The processor may determine respective time resources on which the DRX on-durations included in the specific time duration start by applying 'N' offsets of a specific set indicated through signaling different from the higher layer signaling, among the plurality offset sets included in the DRX-related information, to the DRX cycle. The determined time resources on which the DRX on-durations start may form a pattern repeated every specific time duration.

The device may further include a transceiver configured to transmit and receive a radio signal under control of the processor.

The device may be a user equipment (UE) operating in a wireless communication system.

In another aspect of the present disclosure, provided herein is an operation method of a base station in a wireless communication system, including transmitting discontinuous reception (DRX)-related information including a plurality of offset sets each having 'N' offsets through higher layer signaling; transmitting a physical downlink control channel (PDCCH) including scheduling information related to a specific service in each of DRX on-durations included in a specific time duration based on the DRX-related information; and transmitting or receiving a signal for data of the specific service based on the scheduling information. A DRX cycle included in the DRX-related information may be an integer. The base station may determine respective time resources on which the DRX on-durations included in the specific time duration start by applying 'N' offsets of a specific set indicated through signaling different from the higher layer signaling, among the plurality offset sets included in the DRX-related information, to the DRX cycle. The determined time resources on which the DRX on-durations start may form a pattern repeated every specific time duration.

In another aspect of the present disclosure, provided herein is a base station for wireless communication, including: a memory configured to store instructions; and a processor configured to perform operations by executing the instructions. The operations of the processor may include: transmitting discontinuous reception (DRX)-related information including a plurality of offset sets each having 'N' offsets through higher layer signaling; transmitting a physical downlink control channel (PDCCH) including scheduling information related to a specific service in each of DRX on-durations included in a specific time duration based on the DRX-related information; and transmitting or receiving a signal for data of the specific service based on the scheduling information. A DRX cycle included in the DRX-related information may be an integer. The processor may determine respective time resources on which the DRX on-durations included in the specific time duration start by applying 'N' offsets of a specific set indicated through signaling different from the higher layer signaling, among the plurality offset sets included in the DRX-related information, to the DRX cycle. The determined time resources on which the DRX on-durations start may form a pattern repeated every specific time duration.

**Advantageous Effects**

According to an embodiment of the present disclosure, a device may transmit and receive data based on starting points of various discontinuous reception (DRX) on-durations by dynamically receiving a DRX offset indication while performing a DRX operation.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

**Brief Description of Drawings**

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot.

FIG. 5 illustrates an exemplary physical downlink control channel (PDCCH) transmission and reception process.

FIG. 6 illustrates an exemplary physical downlink shared channel (PDSCH) reception and acknowledgement/negative acknowledgement (ACK/NACK) transmission process.

FIG. 7 illustrates an exemplary physical uplink shared channel (PUSCH) transmission process.

FIG. 8 illustrates a flowchart of the operation of a BS according to an example of the present disclosure.

FIG. 9 illustrates a flowchart of the operation of a UE according to an example of the present disclosure.

FIGS. 10 to 12 illustrate discontinuous reception (DRX) structures according to the present disclosure.

FIG. 13 illustrates a method of a device for operating based on DRX in a wireless communication system according to an embodiment of the present disclosure.

FIG. 14 illustrates an operation method of a BS in a wireless communication system according to an embodiment of the present disclosure.

FIGS. 15 to 18 illustrate an example of a communication system 1 and wireless devices applicable to the present disclosure.

FIG. 19 illustrates an exemplary discontinuous reception (DRX) operation applicable to the present disclosure.

FIG. 20 illustrates a DRX cycle for paging.

FIG. 21 illustrates an extended DRX (eDRX) cycle.

FIG. 22 illustrates a vehicle applicable to the present disclosure.

FIG. 23 illustrates an XR device applicable to the present disclosure.

FIG. 24 illustrates a robot applicable to the present disclosure.

## DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

For the sake of clarity, 3GPP NR is mainly described, but the technical idea of the present disclosure is not limited thereto.

For the background art relevant to the present disclosure, the definitions of terms, and abbreviations, the following documents may be incorporated by reference.

3GPP LTE

- TS 36.211: Physical channels and modulation
- TS 36.212: Multiplexing and channel coding
- TS 36.213: Physical layer procedures
- TS 36.300: Overall description
- TS 36.321: Medium Access Control (MAC)
- TS 36.331: Radio Resource Control (RRC)

3GPP NR

- TS 38.211: Physical channels and modulation
- TS 38.212: Multiplexing and channel coding
- TS 38.213: Physical layer procedures for control
- TS 38.214: Physical layer procedures for data
- TS 38.300: NR and NG-RAN Overall Description
- TS 38.321: Medium Access Control (MAC)
- TS 38.331: Radio Resource Control (RRC) protocol specification

- TS 37.213: Introduction of channel access procedures to unlicensed spectrum for NR-based access

Terms and Abbreviations

- PSS: Primary Synchronization Signal
- SSS: Secondary Synchronization Signal
- CRS: Cell reference signal
- CSI-RS: Channel State Information Reference Signal
- TRS: Tracking Reference Signal
- SS: Search Space
- CSS: Common Search Space
- USS: UE-specific Search Space
- PDCCH: Physical Downlink Control Channel; The PDCCH is used to represent PDCCHs of various structures which may be used for the same purpose in the following description.
- PO: Paging Occasion
- RE: Resource Element
- VRB: Virtual Resource Block
- PRB: Physical Resource Block
- RS: Reference Signal
- TRS: Tracking Reference Signal
- CSI-RS: Channel-State Information Reference Signal

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

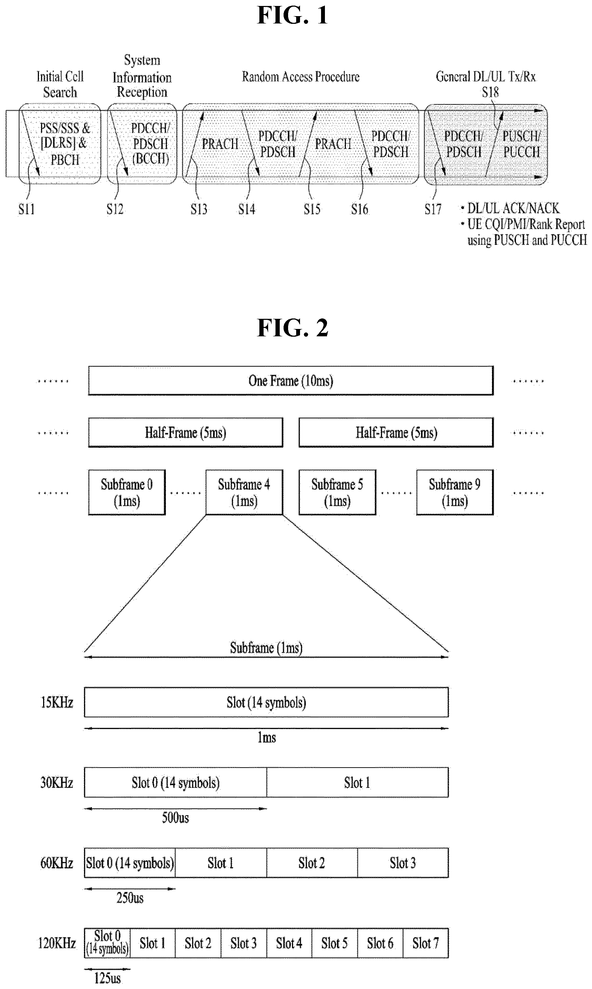

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S 106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| $N^{slot}_{symb}$: Number of symbols in a slot<br>$N^{frame,u}_{slot}$: Number of slots in a frame<br>$N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

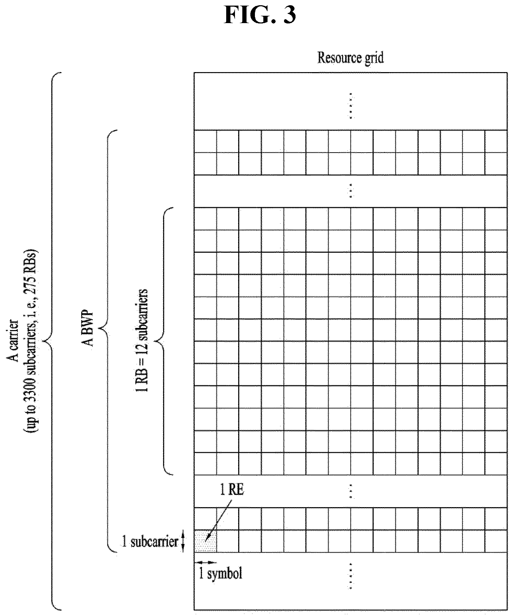

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

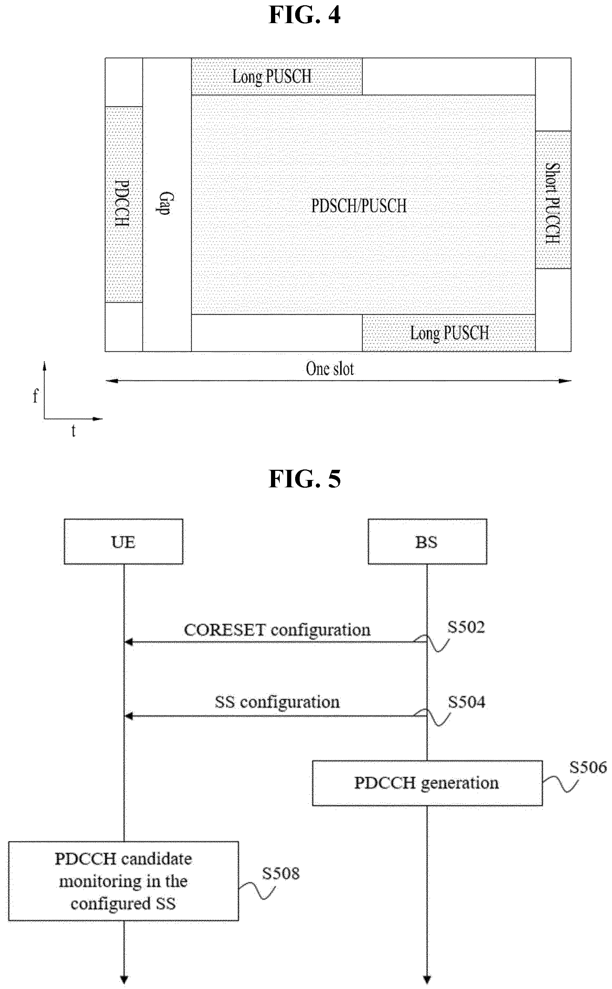

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 5 illustrates an exemplary PDCCH transmission/reception process.

Referring to FIG. 5, a BS may transmit a control resource set (CORESET) configuration to a UE (S502). A CORESET is defined as a resource element group (REG) set having a given numerology (e.g., a subcarrier spacing (SCS), a cyclic prefix (CP) length, and so on). An REG is defined as one OFDM symbol by one (physical) resource block (P)RB. A plurality of CORESETs for one UE may overlap with each other in the time/frequency domain. A CORESET may be configured by system information (e.g., a master information block (MIB)) or higher-layer signaling (e.g., radio resource control (RRC) signaling). For example, configuration information about a specific common CORESET (e.g., CORESET #0) may be transmitted in the MIB. For example, a PDSCH carrying system information block 1 (SIB1) may be scheduled by a specific PDCCH, and CORESET #0 may be used to transmit the specific PDCCH. System information (SIB1) broadcast in a cell includes cell-specific PDSCH configuration information, PDSCH-ConfigCommon. PDSCH-ConfigCommon includes a list (or look-up table) of parameters related to a time-domain resource allocation, pdsch-TimeDomainAllocationList. Each pdsch-TimeDomainAllocationList may include up to 16 entries (or rows) each being joint-encoded {K0, PDSCH mapping type, PDSCH start symbol and length (SLIV)}. Aside from (additionally to) pdsch-TimeDomainAllocationList configured through PDSCH-ConfigCommon, pdsch-TimeDomainAllocationList may be provided through a UE-specific PDSCH configuration, PDSCH-Config. pdsch-TimeDomainAllocationList configured UE-specifically has the same structure as pdsch-TimeDomainAllocationList provided UE-commonly. For K0 and an SLIV of pdsch-TimeDomainAllocationList, the following description is referred to.

Further, configuration information about CORESET #N (e.g., N>0) may be transmitted by RRC signaling (e.g., cell-common RRC signaling, UE-specific RRC signaling, or the like). For example, the UE-specific RRC signaling carrying CORESET configuration information may include, but not limited to, various types of signaling such as an RRC setup message, an RRC reconfiguration message, and/or BWP configuration information. Specifically, a CORESET configuration may include the following information/fields.

- controlResourceSetId: Indicates the ID of a CORESET.
- frequencyDomainResources: Indicates the frequency-domain resources of the CORESET. The resources are indicated by a bitmap in which each bit corresponds to an RB group (= 6 (consecutive) RBs). For example, the most significant bit (MSB) of the bitmap corresponds to a first RB group in a BWP. An RB group corresponding to a bit having a bit value of 1 is allocated as frequency-domain resources of the CORESET.
- duration: Indicates the time-domain resources of the CORESET. It indicates the number of consecutive OFDM symbols included in the CORESET. The duration has a value between 1 and 3.
- cce-REG-MappingType: Indicates a control channel element (CCE)-to-REG mapping type. An interleaved type and a non-interleaved type are supported.
- interleaverSize: Indicates an interleaver size.
- pdcch-DMRS-ScramblingID: Indicates a value used for PDCCH DMRS initialization. When pdcch-DMRS-ScramblingID is not included, the physical cell ID of a serving cell is used.
- precoderGranularity: Indicates a precoder granularity in the frequency domain.
- reg-BundleSize: Indicates an REG bundle size.
- tci-PresentInDCI: Indicates whether a transmission configuration index (TCI) field is included in DL-related DCI.
- tci-StatesPDCCH-ToAddList: Indicates a subset of TCI states configured in pdcch-Config, used for providing quasi-co-location (QCL) relationships between DL RS(s) in an RS set (TCI-State) and PDCCH DMRS ports.

Further, the BS may transmit a PDCCH search space (SS) configuration to the UE (S504). The PDCCH SS configuration may be transmitted by higher-layer signaling (e.g., RRC signaling). For example, the RRC signaling may include, but not limited to, various types of signaling such as an RRC setup message, an RRC reconfiguration message, and/or BWP configuration information. While a CORESET configuration and a PDCCH SS configuration are shown as separately signaled in FIG. 5, for convenience of description, the present disclosure is not limited thereto. For example, the CORESET configuration and the PDCCH SS configuration may be transmitted in one message (e.g., by one RRC signaling) or separately in different messages.

The PDCCH SS configuration may include information about the configuration of a PDCCH SS set. The PDCCH SS set may be defined as a set of PDCCH candidates monitored (e.g., blind-detected) by the UE. One or more SS sets may be configured for the UE. Each SS set may be a UE-specific search space (USS) set or a common search space (CSS) set. For convenience, PDCCH SS set may be referred to as "SS" or "PDCCH SS".

A PDCCH SS set includes PDCCH candidates. A PDCCH candidate is CCE(s) that the UE monitors to receive/detect a PDCCH. The monitoring includes blind decoding (BD) of PDCCH candidates. One PDCCH (candidate) includes 1, 2, 4, 8, or 16 CCEs according to an aggregation level (AL). One CCE includes 6 REGs. Each CORESET configuration is associated with one or more SSs, and each SS is associated with one CORESET configuration. One SS is defined based on one SS configuration, and the SS configuration may include the following information/fields.

- searchSpaceId: Indicates the ID of an SS.
- controlResourceSetId: Indicates a CORESET associated with the SS.
- monitoringSlotPeriodicityAndOffset: Indicates a periodicity (in slots) and offset (in slots) for PDCCH monitoring.
- monitoringSymbolsWithinSlot: Indicates the first OFDM symbol(s) for PDCCH monitoring in a slot configured with PDCCH monitoring. The first OFDM symbol(s) for PDCCH monitoring is indicated by a bitmap with each bit corresponding to an OFDM symbol in the slot. The MSB of the bitmap corresponds to the first OFDM symbol of the slot. OFDM symbol(s) corresponding to bit(s) set to 1 corresponds to the first symbol(s) of a CORESET in the slot.
- nrofCandidates: Indicates the number of PDCCH candidates (one of values 0, 1, 2, 3, 4, 5, 6, and 8) for each AL where AL={ 1, 2, 4, 8, 16}.
- searchSpaceType: Indicates CSS or USS as well as a DCI format used in the corresponding SS type.

Subsequently, the BS may generate a PDCCH and transmit the PDCCH to the UE (S506), and the UE may monitor PDCCH candidates in one or more SSs to receive/detect the PDCCH (S508). An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI (s) | |
| | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |

(continued)

| DCI format | Usage |
|---|---|
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1 0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

A CCE-to-REG mapping type is configured as one of an interleaved CCE-to-REG type and a non-interleaved CCE-to-REG type.

- Non-interleaved CCE-to-REG mapping (or localized CCE-to-REG mapping) (FIG. 5): 6 REGs for a given CCE are grouped into one REG bundle, and all of the REGs for the given CCE are contiguous. One REG bundle corresponds to one CCE.
- Interleaved CCE-to-REG mapping (or distributed CCE-to-REG mapping): 2, 3 or 6 REGs for a given CCE are grouped into one REG bundle, and the REG bundle is interleaved within a CORESET. In a CORESET including one or two OFDM symbols, an REG bundle includes 2 or 6 REGs, and in a CORESET including three OFDM symbols, an REG bundle includes 3 or 6 REGs. An REG bundle size is set on a CORESET basis.

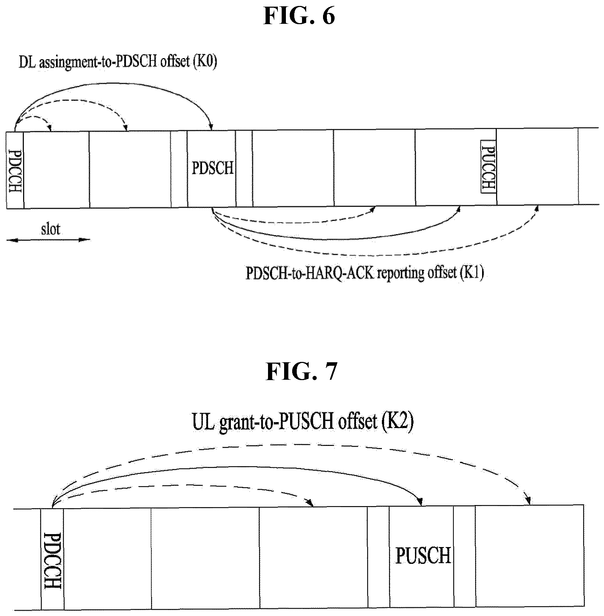

FIG. 6 illustrates an exemplary PDSCH reception and ACK/NACK transmission process. Referring to FIG. 6, the UE may detect a PDCCH in slot #n. The PDCCH includes DL scheduling information (e.g., DCI format 1_0 or DCI format 1_1), and indicates a DL assignment-to-PDSCH offset, K0 and a PDSCH-HARQ-ACK reporting offset, K1. For example, DCI format 1_0 or DCI format 1_1 may include the following information.

- Frequency domain resource assignment: Indicates an RB set allocated to a PDSCH.
- Time domain resource assignment: Indicates K0 (e.g., slot offset), the starting position (e.g., OFDM symbol index) of the PDSCH in slot #n+K0, and the duration (e.g., the number of OFDM symbols) of the PDSCH.
- PDSCH-to-HARQ_feedback timing indicator: Indicates K1.
- HARQ process number (4 bits): Indicates the HARQ process ID of data (e.g., a PDSCH or TB).
- PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

FIG. 7 illustrates an exemplary PUSCH transmission procedure. Referring to FIG. 7, the UE may detect a PDCCH in slot #n. The PDCCH includes DL scheduling information (e.g., DCI format 1_0 or 1_1). DCI format 1_0 or 1_1 may include the following information.

- Frequency domain resource assignment: Indicates an RB set assigned to the PUSCH.

- Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

**Enhanced DRX for (specific) service (e.g., service for XR traffic)**

When a DRX operation through which DL signals are discontinuously received is used for power saving gain of the UE, methods for improving performance related to power saving and latency while ensuring various sizes/periodicities of the DL signals are proposed.

In NR, the DRX operation may be used for the purpose of reducing unnecessary power consumption of the UE, and a DRX structure for the UE in an RRC_IDLE state and a DRX structure for the UE in an RRC_CONNECTED state are defined. In both DRX structures, a duration during which the UE may expect to receive the DL signals is periodically configured, and the other durations are designed to reduce unnecessary power consumption. Characteristically, in the case of C-DRX (i.e., DRX applied to the UE in the RRC_CONNECTED state), a starting position of an on-duration is periodically generated based on the NR Rel-16 standard. In this case, the size of a configurable cycle (i.e., a DRX cycle) may be determined through higher layer parameters provided by the BS to the UE. Table 5 is an excerpt from of the TS 38.331 standard, showing some of parameters that determine a C-DRX cycle. As may be seen in the table below, the BS may indicate one or two types (e.g., long/short) of DRX to the UE, and all DRX cycles of the two types have fixed integer sizes.

[Table 5]

```
drx-LongCycleStartOffset          CHOICE {
      ms10                              INTEGER(0..9),
      ms20                              INTEGER(0..19),
      ms32                              INTEGER(0..31),
      ms40                              INTEGER(0..39),
      ms60                              INTEGER(0..59),
      ms64                              INTEGER(0..63),
      ms70                              INTEGER(0..69),
      ms80                              INTEGER(0..79),
      ms128                             INTEGER(0..127),
      ms160                             INTEGER(0..159),
      ms256                             INTEGER(0..255),
      ms320                             INTEGER(0..319),
      ms512                             INTEGER(0..511),
      ms640                             INTEGER(0..639),
      ms1024                            INTEGER(0..1023),
      ms1280                            INTEGER(0..1279),
      ms2048                            INTEGER(0..2047),
      ms2560                            INTEGER(0..2559),
      ms5120                            INTEGER(0..5119),
      ms10240                           INTEGER(0..10239)
},

shortDRX                SEQUENCE {
      drx-ShortCycle           ENUMERATED  {
          ms2, ms3, ms4, ms5, ms6, ms7, ms8, ms10, ms14, ms16, ms20, ms30, ms32,
          ms35, ms40, ms64, ms80, ms128, ms160, ms256, ms320, ms512, ms640, spare9,
          spare8, spare7, spare6, spare5, spare4, spare3, spare2, spare1 },

      drx-ShortCycleTimer                INTEGER (1..16)
      }
OPTIONAL,    -- Need R
```

In 3GPP, various scenarios and candidate technologies are being discussed for the purpose of supporting an extended reality (XR) service. XR generally has characteristics in which low latency should be satisfied while ensuring high data rate. At the same time, because it is expected that the UE will consume high power, various power saving techniques for increasing battery efficiency are being considered. To prevent unnecessary power consumption of the UE, a situation in which a DRX operation is applied to XR UEs may be considered. However, an existing defined DRX operation of NR may be unsuitable for some traffic characteristics of XR. For example, in the case of XR, the number of frames transmitted per second (i.e., fps) may be included in requirements for transmission and reception of video information. This means that an XR service having a requirement of X fps should guarantee a DRX configuration capable of transmitting and receiving traffic by the UE at a periodicity of minimum 1/X seconds. However, for requirements of fps (e.g., 30, 60, 90, and 120 fps) currently being considered for the XR service, a frame transmission periodicity occurs as a rational number, whereas a DRX cycle supported by the current NR standard is only an integer. Therefore, the existing defined DRX operation of NR may not be suitable for some traffic characteristics of XR. For example, when it is desired to apply a short DRX cycle of 16 ms, which is closest to the size of 1/60 seconds, in order to support the XR service at 60 fps, a residual offset generated due to the difference between the two cycles (e.g., difference between a cycle of 1/60 and a cycle of 16 ms) is gradually accumulated and a gap between a starting position of a DRX on-duration and a location at which XR traffic is transmitted may gradually increase.

To solve this problem, methods of supporting a DRX operation of UEs expecting traffic having various periodic characteristics are proposed. Characteristically, the methods proposed in the present disclosure are advantageous for performing the DRX operation without increasing latency while improving power consumption efficiency, for a service (e.g., XR service) having difficulty supporting a traffic cycle using an existing (Rel-15/16/17 NR) DRX cycle.

Hereinbelow, while the proposed methods will be described based on C-DRX applied to the UE in an RRC_CONNECTED state, the methods proposed in the disclosure are not limited thereto. It will be understood by those skilled in the art that the present disclosure is extensively applicable to other methods (e.g., DRX applied to the UE in an RRC_IDLE state) in which a certain duration during which the UE need not to expect to receive a DL signal may be defined with periodicity. Therefore, the proposed methods may be applied to all types of transmission and reception methods expected by the BS and the UE even without separate explanation. For convenience of explanation, the term DRX is used as a general concept that includes the term C-DRX.

Hereinbelow, while a description will be given based on an NR system, the proposed methods are not limited to NR. Further, while a description will be given hereinbelow based on the characteristics and structure of the XR service, the proposed methods are not specifically limited to supporting the XR service unless otherwise explained. Therefore, the methods proposed in the present disclosure may be applied to various structures and services of wireless communication transmission and reception.

In performing, by the UE, a DRX operation related to a specific service (e.g., XR) (i.e., an operation in which the UE may expect reception of a PDCCH at a location pre-arranged between the BS and the UE, and the BS transmits the PDCCH and the UE monitors the PDCCH at the location), methods for improving power saving efficiency of the UE and reducing transmission and reception latency of control/traffic information are proposed.

As an example, the UE may receive information related to a DRX operation from the BS and determine a monitoring duration of the PDCCH based on the information. In addition, the BS may determine and configure the information related to the DRX operation to inform the UE of the information and may determine a transmission location of the PDCCH based on the information. Further, the UE may transmit a signal and a channel to announce capabilities and/or service requirements thereof, and the BS may receive the signal and channel.

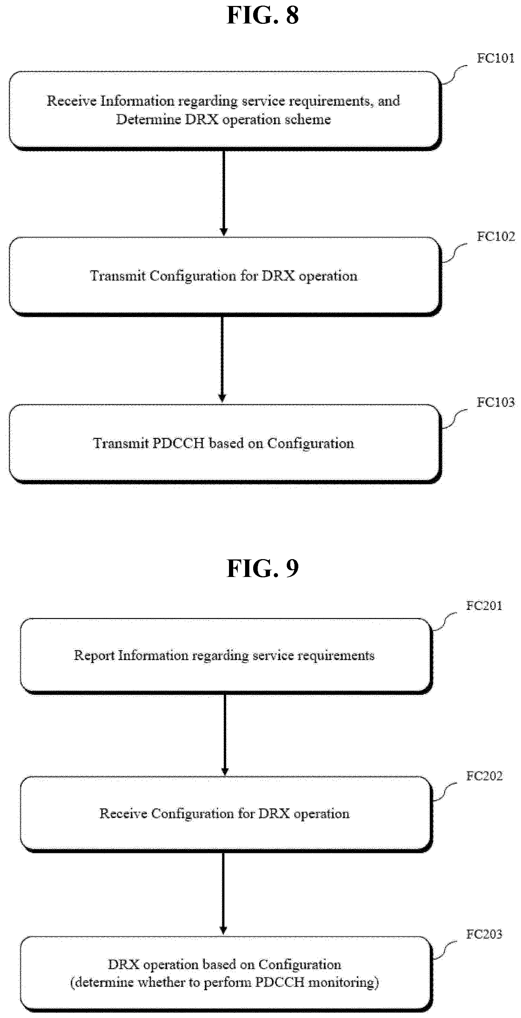

FIG. 8 illustrates a flowchart of the operation of a BS according to an example of the present disclosure.

The BS may receive information reported by the UE and determine a DRX operation scheme based on the reported information (FC101). For example, the information reported by the UE may include information about service requirements required by the UE (e.g., an fps requirement for an XR service) and/or information about capabilities of the UE. In a certain situation (e.g., when the BS already has prior information or when the DRX operation scheme is changed due to the needs of the BS), the report operation of the UE may be omitted.

Next, the BS may generate configuration information related to the DRX operation scheme determined in step FC 101 and transmit the configuration information (FC102). For example, the configuration information may be transmitted using higher layer signaling (e.g., an SIB or RRC signaling). Alternatively, the configuration information may be (semi-)statically transmitted using a method (e.g., downlink control information (DCI) or a MAC control element (CE)/header) of specifically indicating one of a plurality of DRX operation-related configurations provided to the UE.

Thereafter, the BS may determine a transmission timing of a PDCCH based on the transmitted configuration information related to the DRX operation and transmit the PDCCH (FC 103).

FIG. 9 illustrates a flowchart of the operation of a UE according to an example of the present disclosure.

The UE may report related information to the BS (FC201). For example, the information may include information about service requirements required by the UE (e.g., an fps requirement of an XR service) and/or information about capabilities of the UE. In a certain situation (e.g., when the BS already has prior information or when a DRX operation scheme is changed due to the needs of the BS), the report operation of the UE may be omitted.

Next, the UE may monitor and receive configuration information related to the DRX operation scheme, transmitted by the BS (FC202). For example, the configuration information may be received using a higher layer signal (e.g., an SIB or RRC signaling). Alternatively, the configuration information may be (semi-)statically received using a method (e.g., DCI or a MAC CE/header) of specifically indicating one of a plurality of DRX operation-related configurations provided to the UE.

Thereafter, the UE may expect a time point at which a PDCCH will be received based on the received configuration information related to the DRX operation and perform a PDCCH monitoring operation at a location of the time point (FC203).

Some of the proposals in the present specification may be selectively applied. Each proposal may be performed independently without any separate combination, or one or more proposals may be combined/associated. Some terms, symbols, sequences, etc. used may be replaced with other terms, symbols, sequences, etc.

Proposal 1: **Determination of DRX structure based on traffic cycle condition**

The current NR standard supports only a DRX cycle of an integer size, and a fixed DRX cycle value configured semi-statically is maintained for a certain duration. Therefore, DRX supported by the current NR standard may not be suitable for DL signal transmission having characteristics of a non-integer periodicity required by an XR service, etc. To solve this problem, an adaptive DRX operation control method capable of reflecting characteristics of occurrence of a traffic cycle may be considered.

For example, the traffic cycle may be determined according to service requirements between the BS and the UE, and each traffic instance may be determined by the traffic cycle within a specific time duration. A method of determining a DRX structure based on the locations of time domain resource units that satisfy a specific condition related to each determined traffic instance is proposed.

The DRX structure may include a sleep duration during which the UE does not need to perform PDCCH monitoring and/or an active duration during which the UE ends the sleep duration and performs PDCCH monitoring. As a specific example, the DRX structure may be related to determining a starting point of *drx-onDurationTimer*. Hereinbelow, a time point at which the sleep duration ends and the UE may start PDCCH monitoring is defined as a starting point of an on-duration. Since the term "starting point of an on-duration" is for convenience of description, the disclosure is not limited to that term. As a specific method of determining the DRX structure, starting points of on-durations may be set to the locations of time domain resource units that satisfy the above specific condition. Generally, in an existing DRX structure, starting points of on-durations are located at equal intervals based on a DRX cycle. In contrast, according to the DRX structure in this proposal, the starting points of the on-durations may not be at equal intervals (e.g., intervals between the starting points of the on-durations may become variously different).

The specific time duration is a unit constituting the pattern of the proposed DRX structure and may mean a time duration having a pre-arranged length. For example, the specific time duration may be defined based on time domain resource units such as a frame, a subframe, and a slot or may be defined as an absolute time duration such as units of seconds (sec), milliseconds (ms), and microseconds ($\mu$s). Further, the specific time duration may be repeated/configured with the same length. For example, the specific time duration may be defined as a duration from the start of a subframe number (SFN) (i.e., SFN=0) to the end of an SFN (SFN=1023). In this case, SFN=0 is used as a criterion for determining a reference point. When a new SFN starts, the reference point may also be newly determined. As another example, the specific time duration may be defined as a time duration having a size of X ms (where X is an arbitrary integer). A fixed value may be used as the value of X. In this case, even when the DRX structure is changed due to a change in characteristics of the UE or services, the same unit duration may be applied. Alternatively, the value of X may be a value determined by the configuration of the BS or the characteristics of the UE or services. For example, the value of X may be determined by the value of fps of a service expected by the UE. As a specific example, when the UE intends to receive a DL signal of Y fps (where Y is an arbitrary integer), the smallest integer value among multiples of 1000/Y may be set to the value of X (e.g., 30 fps: 100 ms, 60 fps: 50 ms, 90 fps: 100 ms, and 120 fps: 25 ms).

In this case, the specific time duration may be set to a periodicity of X ms based on a reference point that may be commonly assumed between the BS and UE. For example, the specific time duration may be set at a periodicity of X ms starting based on SFN=0. This may be advantageous in that the reference point for applying the proposed method between the BS and the UE is provided without generating separate signaling overhead. Alternatively, the specific time duration may be set to a periodicity of X ms starting from the reference point indicated by the BS. In this case, the reference point indicated by the BS may be semi-statically determined through a higher layer signal, such as an SIB or a dedicated RRC signal, or may be statically determined by the standard. Alternatively, the BS may indicate, through DCI or a MAC layer, actually applied offset values among lists which are semi-statically provided through the higher layer signal, and the UE may receive and apply the offset values. This has the advantage of improving scheduling flexibility by allowing the BS to control the locations of starting points of on-durations generated by the DRX structure.

In the case of the XR service, the service requirements may be related to an expected occurrence cycle of traffic that the UE intends to receive on DL. For example, the service requirements may include the number of frames required to be transmitted and received per second (i.e., fps). Additionally, the form in which the service is provided (e.g., one/two eye buffer) may be included in the service requirements and considered together. In order to determine the service requirements, the UE may make a request to the BS for information about the necessary service requirements, and the BS may determine the service requirements according to situations and inform the UE of the service requirements.

The traffic cycle may refer to a cycle at which DL traffic transmitted to the UE occurs according to the service requirements. In the case of the XR service, the reciprocal of the number of frames required to be transmitted and received per second (i.e., fps) may be used to determine the traffic cycle. For example, in the case of the UE expecting to receive signals of Y fps on DL in the XR service, the size Z of the traffic cycle may be 1000/Y ms. The traffic instance refers to each time point determined by the traffic cycle within a specific time duration. One or more traffic instances may occur within the specific time duration, and an interval between traffic instances has the size of the traffic cycle. Further, if an offset value for the traffic instance is specified, the locations of all traffic instances may be shifted by applying the offset value based on a starting point of the specific time duration. In this case, the offset value may be semi-statically determined through a higher layer signal, such as an SIB or a dedicated RRC signal, or statically determined by the standard. Alternatively, the BS may indicate, through DCI or a MAC layer, actually applied offset values among lists which are semi-statically provided through the higher layer signal, and the UE may receive and apply the offset values. This may serve to cause the BS to control the DRX structure in consideration of the characteristics of traffic and the situations of the UE and a network.

The time domain resource unit that satisfies the above specific condition may mean a transmission/reception transmission unit (e.g., a frame, a subframe, or a slot) that includes (or is adjacent to) a traffic instance within a specific time duration. For example, in the case of an XR service having a service requirement of Y fps, the locations of traffic instances having a traffic cycle of Z (=1000/Y) ms are determined, and slots containing time points of the traffic instances may correspond to the time domain resource units that satisfy the specific condition.

As one specific example, when fps is used as a service requirement of the XR service and, for the UE expecting to receive XR signals of Y fps on DL, a starting point of an n-th on-duration (and/or the location of a corresponding slot) within a specific time duration may be determined based on a function that uses n and Y as parameters. If the BS instructs the UE to use an offset of a certain size in order to support the DRX structure, the on-duration may be started by being shifted by the size of the offset. The function using n and Y as parameters may be expressed in a form of f(nXZ). Here, the function f(x) performs a floor operation (i.e., floor(x) is an operation to obtain the largest integer among integers less than or equal to x), a ceiling operation (i.e., ceil(x) is an operation to obtain the smallest integer among integers greater than or equal to x), or a round operation (i.e., round(x) is an operation that performs a floor operation when a decimal part of x is less than 0.5 and performs a ceiling operation when the decimal part of x is greater than or equal to 0.5). The present embodiment may be expressed as Equation 1 below. In the example of Equation 1, the SFN and the subframe number follow the definition of the 3GPP standard, *unit_Duration* corresponds to the specific time duration described above, and Offset_ms means an offset in ms for shifting the starting point of the on-duration described above. In this case, if there is an offset of a slot unit (e.g., *drx-SlotOffset*) configured by the BS, the starting point of the on-duration may be shifted by the indicated offset of the slot unit at the locations of time points determined through Equation 1.

[Equation 1]

$$[(\text{SFN} \times 10) + \text{subframe number}] \text{ modulo } (\textit{unit\_Duration}) = f(nXZ) + \text{Offset\_ms}$$

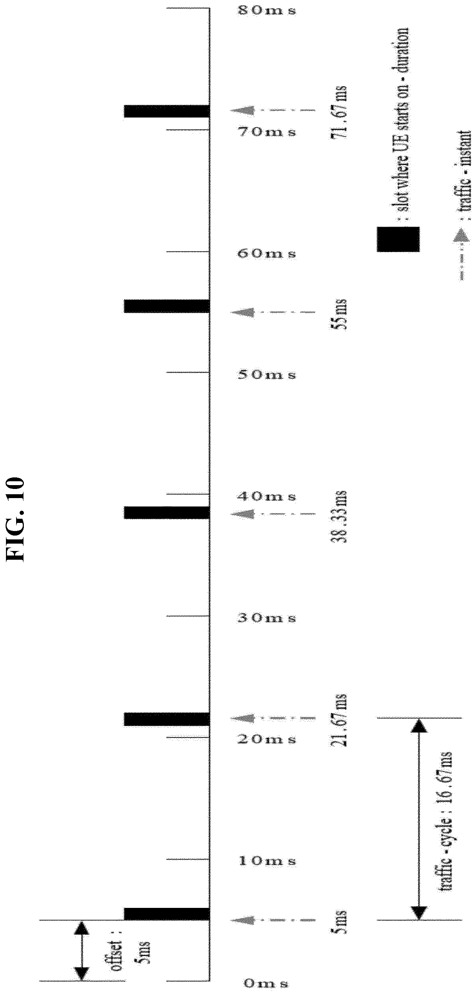

FIG. 10 illustrates an example of the proposed method. FIG. 10 illustrates a DRX structure for DL traffic having a service requirement of 60 fps, in which the length of a traffic cycle is determined as 16.67 (=1000/60) ms and an offset of 5 ms is configured. In FIG. 10, when the length of a slot is 1 ms, the positions of slots containing traffic instances determined by the traffic cycle are set to starting points of on durations. Further, the size of a specific time duration may be set to 50 ms, and the starting points of the on-durations may form a pattern every 50 ms. The DRX structure may be applied to a specific time duration having a multiple of 50 ms or an SFN having a length of 0 to 1023. This example is an example illustrating the principle of the present disclosure, and the scope of the present disclosure is not limited thereto.

Table 6 is an example of the proposed method and lists an interval between starting points of on-durations determined according to fps (service requirement) of XR traffic. In the example in Table 6, the index means the order in which the starting points of the on-durations are arranged within a specific time duration and may mean, for example, the value of n in Equation 1. Further, Table 6 shows an example of setting the size of a specific time duration to 100 ms for 30 fps, 50 ms for 60 fps, 100 ms for 90 fps, and 25 ms for 120 fps. Further, Table 6 shows examples in which the function f(x) defined in Equation 1 is applied using floor, ceiling, and round. This example is an example illustrating the principle of the present disclosure, and the scope of the disclosure is not limited thereto.

[Table 6]

unit: ms

**30 fps**

| Index | 0 | 1 | 2 |
|---|---|---|---|
| floor | 33 | 33 | 34 |
| ceil | 34 | 33 | 33 |
| round | 33 | 34 | 33 |

**60 fps**

| Index | 0 | 1 | 2 |
|---|---|---|---|
| floor | 16 | 17 | 17 |
| ceil | 17 | 17 | 16 |
| round | 17 | 16 | 17 |

**90 fps**

| Index | 0 | 1 | 2 | 3 | 4 | 5 | 6 | 7 | 8 |
|---|---|---|---|---|---|---|---|---|---|
| floor | 11 | 11 | 11 | 11 | 11 | 11 | 11 | 11 | 12 |
| ceil | 12 | 11 | 11 | 11 | 11 | 11 | 11 | 11 | 11 |
| round | 11 | 11 | 11 | 11 | 12 | 11 | 11 | 11 | 11 |

**120 fps**

| Index | 0 | 1 | 2 |
|---|---|---|---|
| floor | 8 | 8 | 9 |
| ceil | 9 | 8 | 8 |
| round | 8 | 9 | 8 |

Proposal 1 is advantageous in that power saving efficiency is improved by supporting the DRX operation of the UE and, at the same time, a decrease in power consumption efficiency, which may occur when traffic having characteristics of a non-integer periodicity is configured with a DRX cycle smaller than an actually required DRX cycle, and an increase in latency, which may occur when traffic with characteristics of a non-integer periodicity is configured with a DRX cycle greater than an actually required DRX cycle, are minimized. In addition, Proposal 1 may be advantageous in that an increase in system overhead is not significantly generated while a position closest to an actual cycle of traffic that should be transmitted and received between the BS and the UE may be set to a starting point of an on-duration.

While the above description has been given based on DL, the proposed methods are not limited to DL and may be applied to other types of service requirements (e.g., UL signal transmission).

Proposal 2: Determination of DRX structure based on offset parameter set

As described above, the current NR standard supports only a DRX cycle of an integer size, and a fixed DRX cycle value configured semi-statically is maintained for a certain duration. Therefore, DRX supported by the current NR standard may not be suitable for DL signal transmission having characteristics of a non-integer periodicity required by an XR service, etc. Further, in XR, a method of scheduling UL and DL transmission/reception so as to be performed simultaneously (or at adjacent times) is being discussed for the purpose of power saving, etc. From this perspective, it is necessary to improve flexibility of the BS for DL/UL scheduling. To solve this problem, an adaptive DRX operation control method that allows the BS to control the time point of a DL signal expected by the UE in units of DRX cycles may be considered.

As an example, a DRX structure in which different DRX parameters configured by the BS are applied to respective starting points of multiple on-durations within a specific time duration is proposed.

The DRX structure may include a sleep duration during which the UE does not need to perform PDCCH monitoring and/or an active duration during which the UE ends the sleep duration and performs PDCCH monitoring. As a specific example, the DRX structure may be related to determining a starting point of *drx-onDurationTimer.* Hereinbelow, a time point at which the sleep duration ends and the UE may start PDCCH monitoring is defined as a starting point of an on-duration. Since this term is used only for convenience of description, the disclosure is not limited to the term used in the proposed methods. As a specific method of determining the DRX structure, starting points of on-durations may be determined as the locations of time domain resource units that satisfy a condition based on a DRX reference point and offset value(s).

As a specific example of determining the DRX reference point, the location of a periodic slot determined through a DRX cycle at which general NR UEs (e.g., Rel-16 NR) operate may be used to determine the DRX reference point. For this purpose, a long or short DRX cycle provided by the BS to the UE through a higher layer parameter of *drx-LongCycleStartOffset* or *drx-ShortCycle* included in a DRX-Config IE may be used to determine the DRX reference point. As a specific example related to the DRX reference point, the locations of time domain resource units that satisfy the specific condition described in Proposal 1 may be used to determine the DRX reference point. For example, the DRX reference point may be a location that satisfies the specific condition described in Proposal 1.

Offset value(s) used to determine the DRX structure may include i) an offset value that shifts in units of frames/subframes based on the location of a frame/subframe determined by a DRX cycle, ii) an offset value that determines the location of a slot in a corresponding frame/subframe, and/or iii) an offset value that shifts in units of slots based on the determined location of a slot. The offset may include a common offset, which is commonly applied to all starting points of on-durations, and/or an individual offset, which may designate different values for respective starting points of on-durations. As an example, the common offset may be determined based on an offset included in the DRX-Config IE (e.g., *drx-LongCycleStartOffset* and/or *drx-SlotOffset*). For example, *drx-LongCycleStartOffset* and/or *drx-SlotOffset* may be used as the common offset. As a specific example of the individual offset, 1) the individual offset may be configured per N on-duration starting points when the N on-duration starting points are configured within a specific time duration and/or 2) N reference points may be derived based on a DRX cycle and the individual offset may be configured per N on-duration reference points under the assumption that an on-duration starting point is determined based on the DRX cycle. The individual offset may be defined based on time domain resource units such as a frame, a subframe, and a slot or may be defined in absolute time units such as sec, ms and $\mu$s. The individual offset may have any integer (or real) value and may include a negative, positive, or 0 value.

The specific time duration is a unit constituting the pattern of the proposed DRX structure and may mean a time duration having a pre-arranged length. For example, the specific time duration may be defined based on time domain resource units such as a frame, a subframe, and a slot or may be defined as an absolute time duration such as units of sec, ms, and $\mu$s. Further, the specific time duration may be repeated/configured with the same length. For example, the specific time duration may be defined as a duration from the start of an SFN (i.e., SFN=0) to the end of an SFN (SFN=1023). In this case, SFN=0 is used as a criterion for determining a reference point. When a new SFN starts, the reference point may also be newly determined. As another example, the specific time duration may be defined as a time duration having a size of X ms (where X is an arbitrary integer). A fixed value may be used as the value of X. In this case, even when the DRX structure is changed due to a change in characteristics of the UE or services, the same unit duration may be applied. Alternatively, the value of X may be a value determined by the configuration of the BS or the characteristics of the UE or services. For example, the value of X may be determined by the value of fps of a service expected by the UE. As a specific example, when the UE intends to receive a DL signal of Y fps (where Y is an arbitrary integer), the smallest multiple of 1000/Y having an integer value may be set to the value of X (e.g., 30 fps: 100 ms, 60 fps: 50 ms, 90 fps: 100 ms, and 120 fps: 25 ms). In this case, a unit duration of the size of X ms may be started based on SFN=0.

In the case of the XR service, the service requirements may be related to an expected occurrence cycle of traffic that the UE intends to receive on DL. For example, the service requirements may include the number of frames required to be transmitted and received per second (i.e., fps). Additionally, the form in which the service is provided (e.g., one/two eye buffer) may be included in the service requirements and considered together. In order to determine the service requirements, the UE may make a request to the BS for information about the necessary service requirements, and the BS may determine the service requirements according to situations and inform the UE of the service requirements.

As a specific method of determining a starting point of an on-duration, DRX reference points are derived using a specific time duration as a unit based on the above-described method, and time points shifted by an offset (common offset/individual offset) with respect to respective DRX reference points may be used as starting points of on-durations. Information related to the offset may be configured by the BS. For example, the offset may be semi-statically determined through a higher layer signal, such as an SIB or a dedicated RRC signal, or statically determined by the standard. Alternatively, the BS may indicate, through DCI or a MAC layer, actually applied offset values among lists which are semi-statically provided through the higher layer signal, and the UE may receive and apply the offset values.

As one specific example, the BS may indicate a DRX cycle of a specific size, a common offset, and sequential individual offset values consisting of N sets to the UE. In determining a starting point of an n-th on-duration within a specific time duration, the UE may determine a slot in which an on-duration starts through a combination of an n-th DRX reference point, the common offset, and an n-th individual offset within the specific time duration, derived from the DRX cycle.

As a more specific example of determining the DRX reference point based on the DRX cycle, Equation 2 shows an example of determining the DRX reference point based on a short DRX cycle. Equation 3 shows an example of determining the DRX reference point based on a long DRX cycle. In Equations 2 and 3, if the size of *unit_Duration* has a multiple of *drx-ShortCycle* or *drx-LongCycle,* a modulo operation for *unit_Duration* may be omitted. Alternatively, the size of *unit_Duration* may be configured only by a multiple of the DRX cycle used. Therethrough, an advantageous effect may be expected in that an existing DRX duration configuration equation may be reused.

{[(SFN x 10)+ subframe number] modulo (unit_Duration)}modulo(drx-ShortCycle)=(drxStartOffset) modulo(drx-ShortCycle)                                   [Equation 2]

{[(SFN x 10)+ subframe number] modulo (unit_Duration)}modulo(drx-LongCycle)=drxStartOffset                    [Equation 3]

In Equations 2 and 3 above, the SFN and the subframe number follow the definition of the 3GPP standard, and *unit_Duration* corresponds to the specific time duration described above. Further, the values of *drx-ShortCycle, drx-LongCycle,* and *drx-StartOffset* may follow parameters included in a DRX-Config IE configured by a higher layer, and the value of *drx-StartOffset* may be applied as a sort of the common offset. A starting point of an on-duration corresponding to the n-th DRX reference point within the specific time duration, derived through Equation 2 or Equation 3 above, may be a slot that satisfies Condition 1 below.

*start drx-onDurationTimer for this DRX group after (common-offset + individual-offset(n)) from the beginning of the subframe*                    [Condition 1]

In condition 1, the value of common-offset may be *drx-SlotOffset* included in the DRX-Config IE configured by a higher layer, and individual-offset(n) may mean an individual offset corresponding to an n-th DRX reference point.

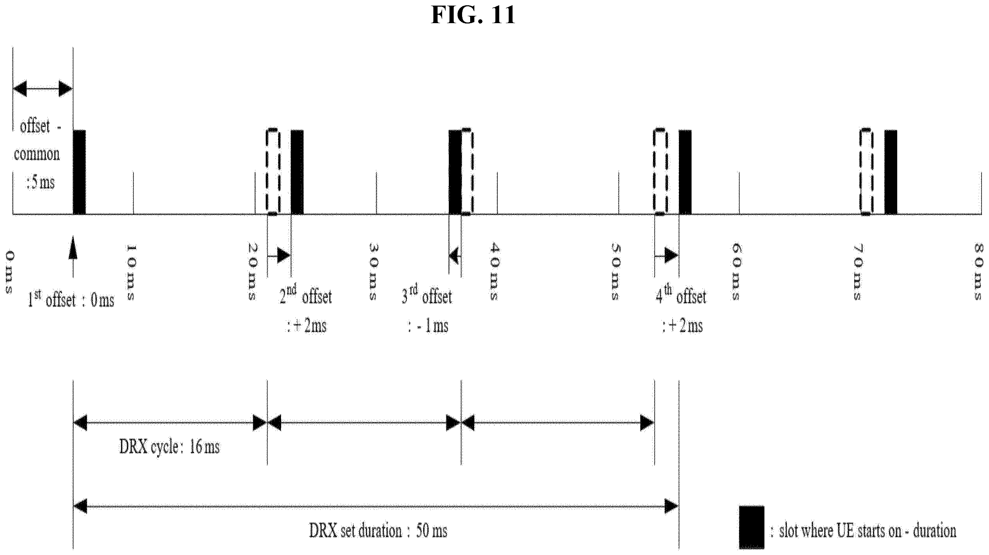

FIG. 11 illustrates an example of the proposed method. FIG. 11 illustrates a DRX structure for supporting DL traffic having a service requirement of 60 fps, in which a short DRX cycle of 16 ms is used and a common offset of 5 ms is applied. Further, FIG. 11 illustrates an example in which the length of a specific time duration is 50 ms and four individual offsets {0 ms, 2 ms, -1 ms, 2 ms} are configured. Starting points of on-durations within the specific time duration having a length of 50 ms may form a pattern, and the pattern may be repeated every 50 ms. In this case, as a result of applying the fourth offset, a starting point of a corresponding on-duration becomes a location outside the range of the specific time duration, and the location coincides with a starting point of the first on-duration belonging to the next specific time duration. Therefore, information about a starting point of the fourth on-duration may be represented as an offset value that specifies the starting point of the first on-duration. In this case, the value of the last offset (or an offset not actually used) is omitted or may also be configured in the form of indicating skipping of a corresponding on-duration. FIG. 11 is an example for explaining the present disclosure, and the present disclosure is not limited thereto. Proposal 2 is advantageous in that power saving efficiency is improved by supporting the DRX operation of the UE and, at the same time, a decrease in power consumption efficiency, which may occur when traffic having characteristics of a non-integer periodicity is configured with a DRX cycle smaller than an actually required DRX cycle, and an increase in latency, which may occur when traffic with characteristics of a non-integer periodicity is configured with a DRX cycle greater than an actually required DRX cycle, are minimized. In addition, since a transmission and reception duration of DL traffic is adjustable, Proposal 2 may be advantageous in that the DRX structure may be flexibly controlled for the purpose of determining a structure capable of simultaneously transmitting and receiving UL traffic and DL traffic.

While the above description has been given based on DL, the proposed methods are not limited to DL and may be applied to other types of service requirements (e.g., UL signal transmission).

**Proposal 2-1: Determination of DRX structure based on DRX cycle parameter set**

As another example with the above purpose/effect, the DRX structure may be determined based on a DRX cycle parameter set.

As an example, a method of determining the DRX structure by applying different DRX parameters configured by the BS to a plurality of starting points of on-durations within a specific time duration in consideration of service requirements between the BS and the UE is proposed.

The DRX structure may include a sleep duration during which the UE does not need to perform PDCCH monitoring and/or an active duration during which the UE ends the sleep duration and performs PDCCH monitoring. As a specific example, the DRX structure may be related to determination of a starting point of *drx-onDurationTimer.* As a specific method, a starting point of an on-duration may be the location of a time domain resource unit to which an interval of DRX cycle size(s) is applied based on a starting point of an on-duration that has occurred immediately before the corresponding on-duration. In a typical DRX structure, a DRX cycle may mean an interval (equal interval) between starting points of on-durations that repeatedly occur periodically. However, in this proposal, the term DRX cycle may be used to refer to an interval between starting points of on-durations (even if the exactly same interval value is not repeated). For example, for convenience of explanation, a value obtained by applying an offset within a certain size to an equal interval may also be referred to as the DRX cycle.

Specifically, the size of the DRX cycle may be the value of the DRX cycle at which general NR UEs (e.g., Rel-16 NR) operate or may be the size of a new DRX cycle. For this purpose, a long or short DRX cycle provided by the BS to the UE through a higher layer parameter of *drx-LongCycleStartOffset* or *drx-ShortCycle* included in a DRX-Config IE may be used. If necessary, new values may be added to the higher layer parameter. A plurality of DRX cycle values may be configured within a specific time duration, and the number of DRX cycle values may be determined based on the number of on-duration starting points occurring within the specific time duration. For example, when the number of on-duration starting points occurring within the specific time duration is N, N DRX cycle values corresponding to the N on-duration starting points may be configured as a parameter set, and each DRX cycle value included in the parameter set may be defined as an interval between a starting point of a corresponding on-duration and a starting point of a next on-duration.

The values of DRX cycles constituting the DRX cycle parameter set may be selected from among parameter values configurable by the BS. Therethrough, an advantageous effect may be expected in terms of scheduling flexibility of the BS. However, when this method is used, signaling overhead of the DRX cycle parameter set may significantly increase. As a method for reducing signaling overhead, L candidates of the DRX cycles that may be used to configure the DRX cycle parameter set may be determined in consideration of service requirements, and index information of the DRX cycle candidates may be included in the DRX cycle parameter set. For example, when two DRX cycle values are used as the candidates, the DRX cycle parameter set may provide only the index information, such as {1,1,2,...}. In this case, the candidate values of the DRX cycles may be values predetermined by the standard according to the service requirements or may be values determined by the BS and configured for the UE. Table 7 shows an example of two candidates for DRX cycles predetermined by the standard according to the service requirements.

[Table 7]

|  | DRX cycle-1 | DRX cycle-2 |
|---|---|---|
| 30 fps | 33 ms | 34 ms |
| 60 fps | 16 ms | 17 ms |
| 90 fps | 11 ms | 12 ms |
| 120 fps | 8 ms | 9 ms |

The specific time duration is a unit constituting the pattern of the proposed DRX structure and may mean a time duration having a pre-arranged length. The specific time duration may be defined based on time domain resource units such as a frame, a subframe, and a slot or may be defined as an absolute time duration such as units of sec, ms, and μs. Further, the specific time duration may be repeated/configured with the same length. For example, the specific time duration may be defined as a duration from the start of an SFN (i.e., SFN=0) to the end of an SFN (SFN=1023). In this case, SFN=0 is used as a criterion for determining a reference point. When a new SFN starts, the reference point may also be newly determined. As another example, the specific time duration may be defined as a time duration having a size of X ms (where X is an arbitrary integer). A fixed value may be used as the value of X. In this case, even when the DRX structure is changed due to a change in characteristics of the UE or services, the same unit duration may be applied. Alternatively, the value of X may be a value determined by the configuration of the BS or the characteristics of the UE or services. For example, the value of X may be determined by the value of fps of a service expected by the UE. As a specific example, when the UE intends to receive a DL signal of Y fps (where Y is an arbitrary integer), the smallest multiple of 1000/Y having an integer value may be set to the value of X (e.g., 30 fps: 100 ms, 60 fps: 50 ms, 90 fps: 100 ms, and 120 fps: 25 ms). In this case, a unit duration of the size of X ms may be started based on SFN=0.

In this case, the specific time duration may be set to a periodicity of X ms based on a reference point that may be commonly assumed between the BS and UE. For example, the specific time duration may be set at a periodicity of X ms starting based on SFN=0. This method may be advantageous in that separate signaling overhead is not generated. Alternatively, the specific time duration may be set to a periodicity of X ms starting from the reference point indicated by the BS. In this case, the reference point indicated by the BS may be semi-statically determined through a higher layer signal, such as an SIB or a dedicated RRC signal, or may be statically determined by the standard. Alternatively, the BS may indicate, through DCI or a MAC layer, actually applied offset values among lists which are semi-statically provided through the higher layer signal, and the UE may receive and apply the offset values. This has the advantage of improving scheduling flexibility by allowing the BS to control the locations of starting points of on-durations generated by the DRX structure.

In the case of the XR service, the service requirements may be related to an expected occurrence cycle of traffic that the UE intends to receive on DL. For example, the service requirements may include the number of frames required to be transmitted and received per second (i.e., fps). Additionally, the form in which the service is provided (e.g., one/two eye buffer) may be included in the service requirements and considered together. In order to determine the service requirements, the UE may make a request to the BS for information about the necessary service requirements, and the BS may determine the service requirements according to situations and inform the UE of the service requirements.

As one specific example, the BS may indicate a DRX cycle parameter set consisting of N DRX cycles to the UE. The UE may determine a starting point of the next on-duration by applying the n-th DRX cycle value of the DRX cycle parameter set to a starting point of the n-th on-duration within a specific time duration. In this case, a starting point of an on-duration that first starts within the specific time duration may be determined as a starting position of the specific time duration or may be a location obtained by applying an offset to the starting position of the specific time duration. In addition, a starting point of an N-th on-duration within the specific time duration and a starting point of an on-duration derived based on the N-th value of the DRX cycle parameter set may be a starting point of the first on-duration included in the next specific time duration.

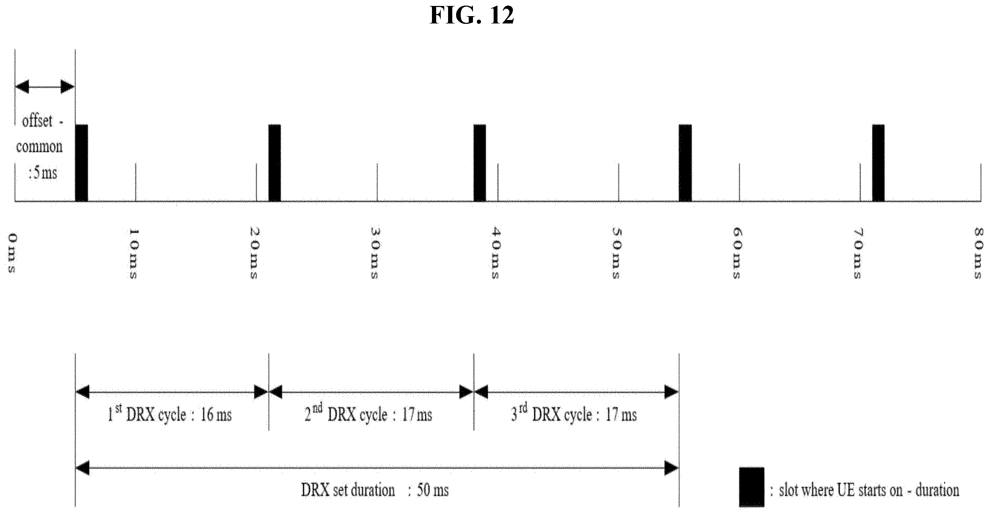

FIG. 12 illustrates an example of a proposed method. The example in FIG. 12 illustrates a DRX structure for supporting DL traffic having a service requirement of 60 fps, in which a DRX cycle parameter set consisting of three values is configured with sizes of {16 ms, 17 ms, 17 ms}. In this case, starting points of on-durations within a specific time duration of a length of 50 ms form a pattern, and the pattern is repeated every 50 ms. In the example of FIG. 12, an offset is applied to a starting point of the specific time duration. The scope of rights of the present disclosure is not limited thereto.

Proposal 2-1 is advantageous in that power saving efficiency is improved by supporting the DRX operation of the UE and, at the same time, a decrease in power consumption efficiency, which may occur when traffic having characteristics of a non-integer periodicity is configured with a DRX cycle smaller than an actually required DRX cycle, and an increase in latency, which may occur when traffic with characteristics of a non-integer periodicity is configured with a DRX cycle greater than an actually required DRX cycle, may be reduced. In addition, since a transmission and reception duration of DL traffic between the BS and the UE is adjustable, Proposal 2-1 may be advantageous in that the DRX structure may be flexibly controlled for the purpose of determining a structure capable of simultaneously transmitting and receiving UL traffic and DL traffic.

While the above description has been given based on DL, the proposed methods are not limited to DL and may be applied to other types of service requirements (e.g., UL signal transmission).

Proposal 3: Indication of pattern of predefined DRX structure

The above-proposed methods of the adaptive DRX structure considering a non-integer periodicity may be advantageous in terms of accurately satisfying service requirements or improving scheduling flexibility of the BS. On the other hand, in order to satisfy various requirements, such methods need to consider that the methods may increase complexity of the BS or the UE or generate a large amount of signaling overhead. To solve this problem, methods for lowering the complexity of the BS and the UE and signaling overhead while supporting transmission and reception of DL signals with characteristics of a non-integer periodicity may be considered.

For example, the DRX structure may be determined by applying a predefined occurrence pattern of a starting point of an on-duration starting point applied within a specific time duration in consideration of service requirements between the BS and UE.

The DRX structure may include a sleep duration during which the UE does not need to perform PDCCH monitoring and/or an active duration during which the UE ends the sleep duration and performs PDCCH monitoring. As a specific example, the DRX structure may be related to determining a starting point of *drx-onDurationTimer.* Specifically, starting points of on-durations may be determined as locations of time domain resource units determined by a pre-arranged pattern.

The specific time duration is a unit constituting the pattern of the proposed DRX structure and may mean a time duration having a pre-arranged length. For example, the specific time duration may be defined based on time domain resource units such as a frame, a subframe, and a slot or may be defined as an absolute time duration such as units of sec, ms, and $\mu$s. Further, the specific time duration may be repeated/configured with the same length. For example, the specific time duration may be defined as a duration from the start of an SFN (i.e., SFN=0) to the end of an SFN (SFN=1023). In this case, SFN=0 is used as a criterion for determining a reference point. When a new SFN starts, the reference point may also be newly determined. As another example, the specific time duration may be defined as a time duration having a size of X ms (where X is an arbitrary integer). A fixed value may be used as the value of X. In this case, even when the DRX structure is changed due to a change in characteristics of the UE or services, the same unit duration may be applied. Alternatively, the value of X may be a value determined by the configuration of the BS or the characteristics of the UE or services. For example, the value of X may be determined by the value of fps of a service expected by the UE. As a specific example, when the UE intends to receive a DL signal of Y fps (where Y is an arbitrary integer), the smallest multiple of 1000/Y having an integer value may be set to the value of X (e.g., 30 fps: 100 ms, 60 fps: 50 ms, 90 fps: 100 ms, and 120 fps: 25 ms).

In this case, the specific time duration may be set to a periodicity of X ms based on a reference point that may be commonly assumed between the BS and UE. For example, the specific time duration may be set at a periodicity of X ms starting based on SFN=0. This may be advantageous in that the reference point for applying the proposed method between the BS and the UE is provided without generating separate signaling overhead. Alternatively, the specific time duration may be set to a periodicity of X ms starting from the reference point indicated by the BS. In this case, the reference point indicated by the BS may be semi-statically determined through a higher layer signal, such as an SIB or a dedicated RRC signal, or may be statically determined by the standard. Alternatively, the BS may indicate, through DCI or a MAC layer, actually applied offset values among lists which are semi-statically provided through the higher layer signal, and the UE may receive and apply the offset values. This has the advantage of improving scheduling flexibility by allowing the BS to control the locations of starting points of on-durations generated by the DRX structure.

The occurrence pattern of starting points of on-durations may be derived through a parameter set predetermined by the standard. For example, Table 6 above shows an interval between starting points of on-durations that occur when Proposal 1 is applied. Table 6 may be predefined/preconfigured (e.g., predefined by the standard) and a method of indicating the interval may be used. In this case, there is a plurality of parameter sets, and the BS may indicate one of the plurality of parameter sets to determine the DRX structure. To this end, the BS may select one of the predetermined parameter sets and indicate the selected parameter set to the UE (e.g., indicate the index value of the parameter set). As an indication method, a higher layer signal, such as an SIB or RRC signaling, may be used, or a method of indicating or changing a parameter set through DCI or a MAC CE/header may be used.

As a specific example of configuring the parameter sets, one of the following options may be used.

**Option 3-1: Indication** of set of DRX cycles

As one method of configuring a parameter set related to determination of the DRX structure, a set consisting of parameters representing the sizes of DRX cycles may be used. In this case, the size of the DRX cycle may mean a time interval between starting points of successive on-durations, and the parameter set may consist of a set of different DRX cycle values. As an example, Table 6 shows an interval between starting points of on-durations occurring when Proposal 1 is applied. Information as in Table 6 may be predefined/preconfigured (e.g., predefined by the standard) or may be applied according to the requirements of the UE such as a traffic cycle.

Table 8 and Table 9 show an example of configuring a parameter set corresponding to a set of DRC cycles in relation to option 3-1. The example of Table 8 shows a parameter set configured in units of a minimum specific time duration during which the pattern of DRX cycles may be periodically repeated depending on the value of fps, and the example of Table 9 shows a parameter set which is configurable when 100 ms is determined as the specific time duration.

[Table 8]

| 30 fps | Index | 0 | 1 | 2 | | | | | | unit: ms |
|---|---|---|---|---|---|---|---|---|---|---|
| | DRX cycle | 33 | 33 | 34 | | | | | | |

| 60 fps | Index | 0 | 1 | 2 |
|---|---|---|---|---|
| | DRX cycle | 16 | 17 | 17 |

| 90 fps | Index | 0 | 1 | 2 | 3 | 4 | 5 | 6 | 7 | 8 |
|---|---|---|---|---|---|---|---|---|---|---|
| | DRX cycle | 11 | 11 | 11 | 11 | 11 | 11 | 11 | 11 | 12 |

| 120 fps | Index | 0 | 1 | 2 |
|---|---|---|---|---|
| | DRX cycle | 8 | 8 | 9 |

[Table 9]

| 30 fps | Index | 0 | 1 | 2 | | | | | | | | unit: ms |
|---|---|---|---|---|---|---|---|---|---|---|---|---|
| | DRX cycle | 33 | 33 | 34 | | | | | | | | |

| 60 fps | Index | 0 | 1 | 2 | 3 | 4 | 5 |
|---|---|---|---|---|---|---|---|
| | DRX cycle | 16 | 17 | 17 | 16 | 17 | 17 |

| 90 fps | Index | 0 | 1 | 2 | 3 | 4 | 5 | 6 | 7 | 8 |
|---|---|---|---|---|---|---|---|---|---|---|
| | DRX cycle | 11 | 11 | 11 | 11 | 11 | 11 | 11 | 11 | 12 |

| 120 fps | Index | 0 | 1 | 2 | 3 | 4 | 5 | 6 | 7 | 8 | 9 | 10 | 11 |
|---|---|---|---|---|---|---|---|---|---|---|---|---|---|
| | DRX cycle | 8 | 8 | 9 | 8 | 8 | 9 | 8 | 8 | 9 | 8 | 8 | 9 |

**Option 3-2: Indication of set of offsets**

As one method of configuring the parameter set related to determination of the DRX structure, a set consisting of parameters representing the sizes of offsets may be used. In this case, the offset refers to a value by which the location of a starting point of an on-duration is shifted from a DRX reference point. The DRX reference point may be determined as a periodic position determined due to a DRX cycle. In this case, the parameter set represented as the sizes of the offsets may consist of a set of offset values applied to respective DRX reference points included in a specific time duration.

Table 10 and Table 11 show examples of configuring a parameter set consisting of a set of offset values in relation to application of option 3-2. The example of Table 10 shows a parameter set configured in units of a minimum specific time duration during which the pattern of DRX cycles may be periodically repeated depending on the value of fps. The example of Table 11 shows a parameter set which is configurable when 100 ms is determined as the specific time duration.

[Table 10]

unit: ms

| 30 fps | Index | 0 | 1 | 2 | 3 |
|---|---|---|---|---|---|
| | offset | 0 | 1 | 2 | 4 |

| 60 fps | Index | 0 | 1 | 2 | 3 |
|---|---|---|---|---|---|
| | offset | 0 | 0 | 1 | 2 |

| 90 fps | Index | 0 | 1 | 2 | 3 | 4 | 5 | 6 | 7 | 8 | 9 |
|---|---|---|---|---|---|---|---|---|---|---|---|
| | offset | 0 | 1 | 2 | 3 | 4 | 5 | 6 | 7 | 8 | 10 |

| 120 fps | Index | 0 | 1 | 2 | 3 |
|---|---|---|---|---|---|
| | offset | 0 | 0 | 0 | 1 |

[Table 11]

unit: ms

| 30 fps | Index | 0 | 1 | 2 | 3 |
|---|---|---|---|---|---|
| | offset | 0 | 1 | 2 | 4 |

| 60 fps | Index | 0 | 1 | 2 | 3 | 4 | 5 | 6 |
|---|---|---|---|---|---|---|---|---|
| | offset | 0 | 0 | 1 | 2 | 2 | 3 | 4 |

| 90 fps | Index | 0 | 1 | 2 | 3 | 4 | 5 | 6 | 7 | 8 | 9 |
|---|---|---|---|---|---|---|---|---|---|---|---|
| | offset | 0 | 1 | 2 | 3 | 4 | 5 | 6 | 7 | 8 | 10 |

| 120 fps | Index | 0 | 1 | 2 | 3 | 4 | 5 | 6 | 7 | 8 | 9 | 10 | 11 | 12 |
|---|---|---|---|---|---|---|---|---|---|---|---|---|---|---|
| | offset | 0 | 0 | 0 | 1 | 1 | 1 | 2 | 2 | 2 | 3 | 3 | 3 | 4 |

Proposal 3 is advantageous in that power saving efficiency is improved by supporting the DRX operation of the UE and, at the same time, a decrease in power consumption efficiency, which may occur when traffic with characteristics of a non-integer periodicity is configured with a DRX cycle smaller than an actually required DRX cycle, and an increase in latency, which may occur when traffic with characteristics of a non-integer periodicity is configured with a DRX cycle greater than an actually required DRX cycle, may be reduced. Further, since the DRX structure is determined only by the service requirements of the UE, Proposal 3 may provide an advantageous effect in terms of signaling overhead.

While the above description has been given based on DL, the proposed methods are not limited to DL and may be applied to other types of service requirements (e.g., UL signal transmission).

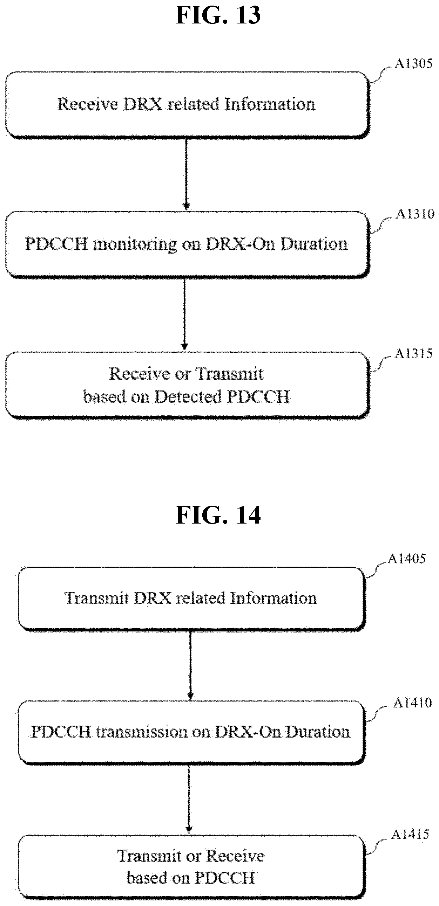

FIG. 13 illustrates a method of a device for operating based on DRX in a wireless communication system according to an embodiment of the present disclosure.

Referring to FIG. 13, the device may receive DRX-related information through higher layer signaling (A1305). The DRX-related information may include a plurality of offset sets each having 'N' offsets.

The device may monitor a PDCCH including scheduling information related to a specific service in each of DRX on-durations included in a specific time duration based on the DRX-related information (A1310).

The device may receive or transmit a signal for data of the specific service based on the scheduling information detected as a result of monitoring the PDCCH (A1315).

A DRX cycle included in the DRX-related information may be an integer. The device may determine respective time resources on which the DRX on-durations included in the specific time duration start by applying 'N' offsets of a specific set indicated through signaling different from the higher layer signaling, among the plurality offset sets included in the DRX-related information, to the DRX cycle. The determined time resources on which the DRX on-durations start form a pattern repeated every specific time duration.

The data of the specific service may be periodic data, and a periodicity of the periodic data may be a rational number other than an integer.

Information related to the specific set may be received through DCI or MAC signaling.

'N' may represent the number of time resources on which the DRX on-durations forming the pattern during the specific time duration start. 'N' may represent the number of the DRX on-durations included in the specific time duration.

The specific set applied to the DRX cycle may be related to at least one of a first offset, which is common to the DRX on-durations, or a second offset, which is individually configurable for each of the DRX on-durations.

The specific set applied to the DRX cycle may be determined based on the periodicity of the data which is a rational number other than an integer.

The specific service may be an XR service.

A periodicity of the data may be related to fps of XR data. FIG. 14 illustrates an operation method of a BS in a wireless communication system according to an embodiment of the present disclosure.

Referring to FIG. 14, the BS may transmit DRX-related information through higher layer signaling (A1405). The DRX-related information may include a plurality of offset sets each having 'N' offsets.

The BS may transmit a PDCCH including scheduling information related to a specific service in each of DRX on-durations included in a specific time duration based on the DRX-related information (A1410).

The BS may transmit or receive a signal for data of the specific service based on the scheduling information (A1415).

A DRX cycle included in the DRX-related information may be an integer. The BS may determine respective time resources on which the DRX on-durations included in the specific time duration start by applying 'N' offsets of a specific set indicated through signaling different from the higher layer signaling, among the plurality offset sets included in the DRX-related information, to the DRX cycle. The determined time resources on which the DRX on-durations start may form a pattern repeated every specific time duration

The data of the specific service may be periodic data, and a periodicity of the periodic data may be a rational number other than an integer.

Information related to the specific set may be transmitted through DCI or MAC signaling.

'N' may represent the number of time resources on which the DRX on-durations forming the pattern during the specific time duration start. 'N' may represent the number of the DRX on-durations included in the specific time duration.

The specific set applied to the DRX cycle may be related to at least one of a first offset, which is common to the DRX on-durations, or a second offset, which is individually configurable for each of the DRX on-durations.

The specific set applied to the DRX cycle may be determined based on the periodicity of the data which is a rational number other than an integer.

The specific service may be an XR service.

A periodicity of the data may be related to fps of XR data.

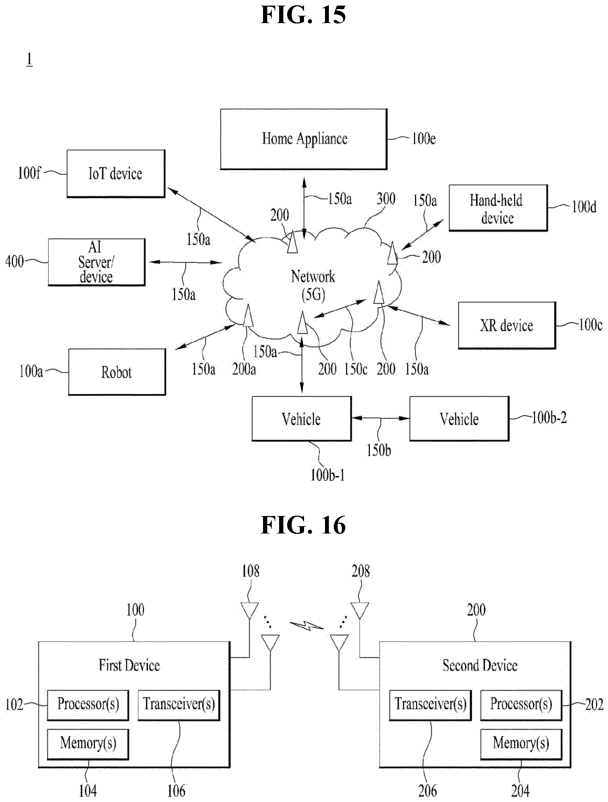

FIG. 15 illustrates a communication system 1 applied to the present disclosure.

Referring to FIG. 15, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a handheld device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The handheld device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication

(e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 16 illustrates wireless devices applicable to the present disclosure.

Referring to FIG. 16, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

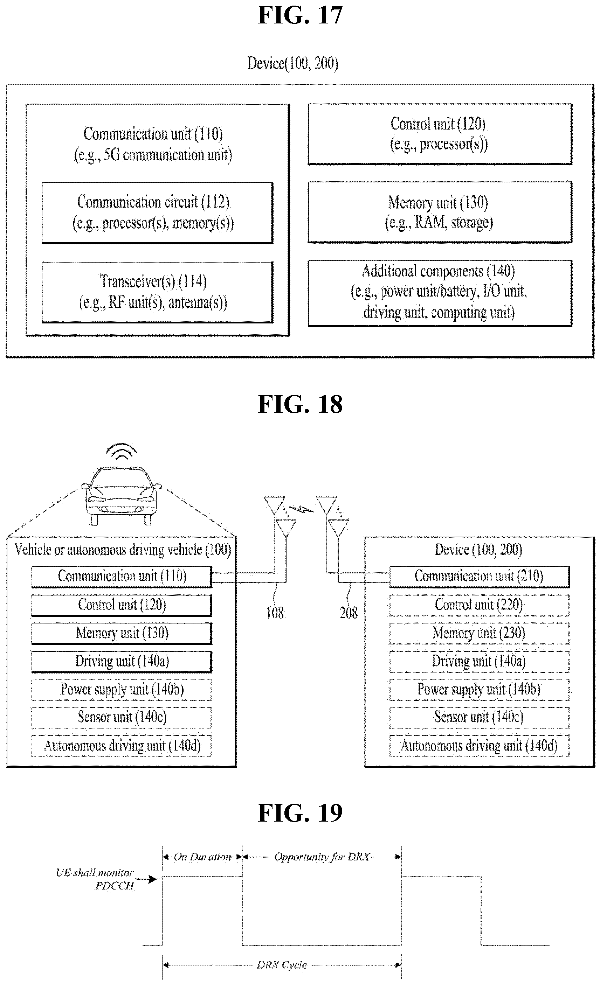

FIG. 17 illustrates another example of a wireless device applied to the present disclosure. The wireless device may be implemented in various forms according to a use-case/service (refer to FIG. 15).

Referring to FIG. 17, wireless devices 100 and 200 may correspond to the wireless devices 100 and 200 of FIG. 16 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 16. For example, the transceiver(s) 114 may include the one or more transceivers 106 and 206 and/or the one or more antennas 108 and 208 of FIG. 16. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 15), the vehicles (100b-1 and 100b-2 of FIG. 15), the XR device (100c of FIG. 15), the handheld device (100d of FIG. 15), the home appliance (100e of FIG. 15), the IoT device (100f of FIG. 15), a digital broadcast terminal, a hologram device, a public safety device, an MTC device, a medicine device, a fintech device (or a finance device), a security device, a climate/environment device, the AI server/device (400 of FIG. 15), the BSs (200 of FIG. 15), a network node, etc. The wireless device may be used in a mobile or fixed place according to a use-example/service.

In FIG. 17, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 18 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 18, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 17, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

FIG. 19 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 19, a DRX cycle includes an On-duration and an Opportunity for DRX. The DRX cycle defines a time interval between periodic repetitions of the On-duration. The On-duration is a time period during which the UE monitors a PDCCH. When the UE is configured with DRX, the UE performs PDCCH monitoring during the On-duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On-duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in an embodiment of the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in an embodiment of the present disclosure. Irrespective of whether DRX is configured, PDCCH monitoring may be restricted during a time period configured as a measurement gap.

Table 12 describes a DRX operation of a UE (in the RRC_CONNECTED state). Referring to Table 12, DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the afore-described/proposed procedures and/or methods.

[Table 12]

|  | Type of signals | UE procedure |
|---|---|---|
| 1st step | RRC signalling (MAC-CellGroupConfig) | - Receive DRX configuration information |
| 2nd Step | MAC CE ((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX.

- Value of drx-OnDurationTimer: defines the duration of the starting period of the DRX cycle.
- Value of drx-InactivityTimer: defines the duration of a time period during which the UE is awake after a PDCCH occasion in which a PDCCH indicating initial UL or DL data has been detected
- Value of drx-HARQ-RTT-TimerDL: defines the duration of a maximum time period until a DL retransmission is received after reception of a DL initial transmission.

Value of drx-HARQ-RTT-TimerDL: defines the duration of a maximum time period until a grant for a UL retransmission is received after reception of a grant for a UL initial transmission.

- drx-LongCycleStartOffset: defines the duration and starting time of a DRX cycle.
- drx-ShortCycle (optional): defines the duration of a short DRX cycle.

When any of drx-OnDurationTimer, drx-InactivityTimer, drx-HARQ-RTT-TimerDL, and drx-HARQ-RTT-Timer-DL is running, the UE performs PDCCH monitoring in each PDCCH occasion, staying in the awake state.

RRC IDLE DRX

In an RRC_IDLE state and an RRC_INACTIVE state, DRX is used to discontinuously receive a paging signal. For convenience, DRX performed in the RRC_IDLE (or RRC_INACTIVE) state is referred to as RRC_IDLE DRX.

Accordingly, when DRX is configured, PDCCH monitoring/reception may be discontinuously performed in the time domain in performing the procedures and/or methods described/proposed above.

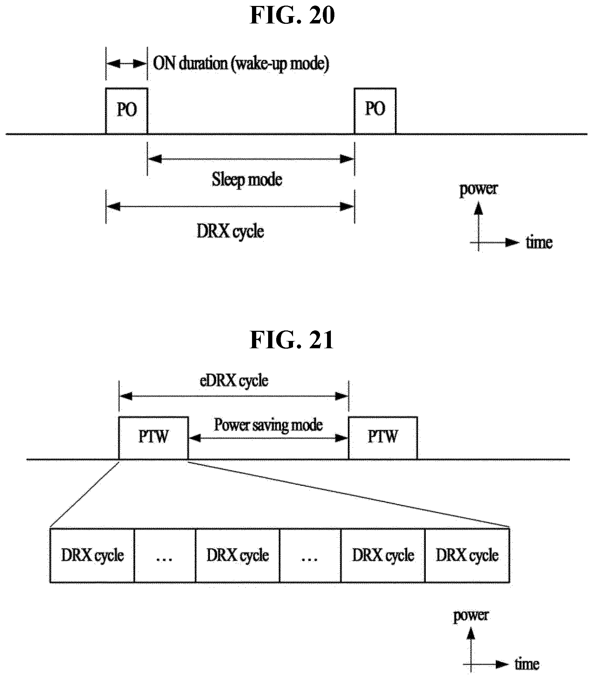

FIG. 20 illustrates a DRX cycle for paging.

Referring to FIG. 20, DRX may be configured for discontinuous reception of a paging signal. The UE may receive DRX configuration information from the BS through higher layer (e.g., RRC) signaling. The DRX configuration information may include configuration information about a DRX cycle, a DRX offset, and a DRX timer. The UE repeats an on-duration and a sleep duration according to the DRX cycle. The UE may operate in wake-up mode in the on-duration and in sleep mode in the sleep duration.

In wakeup mode, the UE may monitor a paging occasion (PO) to receive a paging message. PO refers to a time resource/duration (e.g., a subframe or a slot) on/during which the UE expects to receive the paging message. PO monitoring includes monitoring a PDCCH (or an MTC PDCCH (MPDCCH) or a narrowband PDCCH (NPDCCH)) (hereinafter referred to as a paging PDCCH) scrambled with a P-RNTI in a PO. The paging message may be included in the paging PDCCH or in a PDSCH scheduled by the paging PDCCH. One or multiple POs are included in a paging frame (PF). The PF may be periodically configured based on a UE ID. Here, the PF corresponds to one radio frame, and the UE ID may be determined based on an international mobile subscriber identity (IMSI) of the UE. When DRX is configured, the UE monitors only one PO per DRX cycle. Upon receiving a paging message indicating a change in an ID of the UE and/or system information in the PO, the UE may perform a random access channel (RACH) procedure to initialize (or reconfigure) a connection with the BS or may receive (or acquire) new system information from the BS. Therefore, in performing the procedures and/or methods described/proposed above, PO monitoring may be discontinuously performed in the time domain in order to perform the RACH procedure for a connection with the BS or to receive (or acquire) new system information from the BS.

FIG. 21 illustrates an extended DRX (eDRX) cycle.

According to a DRX cycle configuration, a maximum cycle duration may be limited to 2.56 seconds. However, for UEs that transmit and receive data intermittently, such as MTC UEs or narrowband Internet of things (NB-IoT) UEs, unnecessary power consumption may occur during a DRX cycle. To further reduce the power consumption of a UE, a method of significantly expanding the DRX cycle based on power saving mode (PSM) and a paging time window or paging transmission window (PTW) has been introduced, and the extended DRX cycle is simply referred to as an eDRX cycle. Specifically, a paging hyperframe (PH) is periodically configured based on a UE ID, and the PTW is defined within the PH. The UE may perform the DRX cycle in a PTW duration and monitor a paging signal by switching to wake-up mode in a PO thereof. One or more DRX cycles (e.g., wake-up mode and sleep mode) of FIG. 20 may be included within the PTW duration. The number of DRX cycles within the PTW duration may be configured by the BS through a higher layer (e.g., RRC) signal.

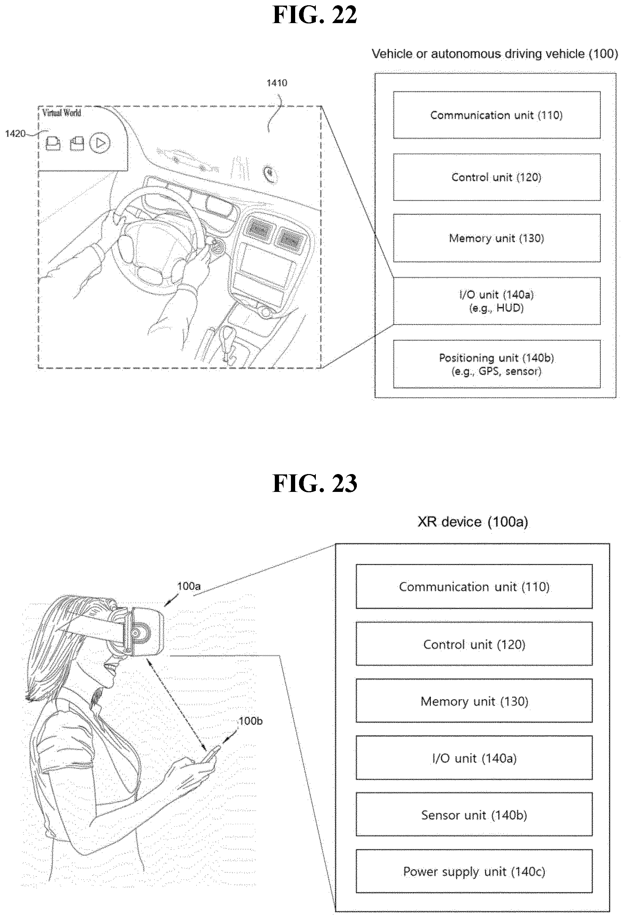

FIG. 22 illustrates a vehicle applied to the present disclosure. The vehicle may be implemented as a transportation means, a train, an airplane, a ship, etc.

Referring to FIG. 22, a vehicle 100 may include a communication unit 110, a control unit 120, a memory unit 130, an input/output (I/O) unit 140a, and a positioning unit 140b. Herein, blocks 110 to 130/140a and 140b correspond to blocks 110 to 130/140 of FIG. 28.

The communication unit 110 may transmit and receive signals (e.g., data and control signals) to and from external devices such as other vehicles or BSs. The control unit 120 may perform various operations by controlling constituent elements of the vehicle 100. The memory unit 130 may store data/parameters/programs/code/instructions for supporting various functions of the vehicle 100. The I/O unit 140a may output an AR/VR object based on information within the memory unit 130. The I/O unit 140a may include a HUD. The positioning unit 140b may acquire information about the position of the vehicle 100. The position information may include information about an absolute position of the vehicle 100, information about the position of the vehicle 100 within a traveling lane, acceleration information, and information about the position of the vehicle 100 from a neighboring vehicle. The positioning unit 140b may include a GPS and various sensors.

As an example, the communication unit 110 of the vehicle 100 may receive map information and traffic information from an external server and store the received information in the memory unit 130. The positioning unit 140b may obtain the vehicle position information through the GPS and various sensors and store the obtained information in the memory unit 130. The control unit 120 may generate a virtual object based on the map information, traffic information, and vehicle position information, and the I/O unit 140a may display the generated virtual object on a window in the vehicle (1410 and 1420). The control unit 120 may determine whether the vehicle 100 normally drives within a traveling lane, based on the vehicle position information. If the vehicle 100 abnormally exits from the traveling lane, the control unit 120 may display a warning on the window in the vehicle through the I/O unit 140a. In addition, the control unit 120 may broadcast a warning message regarding driving abnormality to neighboring vehicles through the communication unit 110. According to situation, the control unit 120 may transmit the vehicle position information and the information about driving/vehicle abnormality to related organizations.

FIG. 23 illustrates an XR device applied to the present disclosure. The XR device may be implemented by an HMD, a HUD mounted in a vehicle, a television, a smartphone, a computer, a wearable device, a home appliance, digital signage, a vehicle, a robot, etc.

Referring to FIG. 23, an XR device 100a may include a communication unit 110, a control unit 120, a memory unit 130, an I/O unit 140a, a sensor unit 140b, and a power supply unit 140c.

The communication unit 110 may transmit and receive signals (e.g., media data and control signals) to and from external devices such as other wireless devices, handheld devices, or media servers. The media data may include video, images, and sound. The control unit 120 may perform various operations by controlling constituent elements of the XR device 100a. For example, the control unit 120 may be configured to control and/or perform procedures such as video/image acquisition, (video/image) encoding, and metadata generation and processing. The memory unit 130 may store data/parameters/programs/code/instructions needed to drive the XR device 100a and/or generate an XR object. The I/O unit 140a may obtain control information and data from the exterior and output the generated XR object. The I/O unit 140a may include a camera, a microphone, a user input unit, a display unit, a speaker, and/or a haptic module. The sensor unit 140b may obtain an XR device state, surrounding environment information, user information, etc. The sensor unit 140b may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone, and/or a radar. The power supply unit 140c may supply power to the XR device 100a and include a wired/wireless charging circuit, a battery, etc.

For example, the memory unit 130 of the XR device 100a may include information (e.g., data) needed to generate the XR object (e.g., an AR/VR/MR object). The I/O unit 140a may receive a command for manipulating the XR device 100a from a user and the control unit 120 may drive the XR device 100a according to a driving command of a user. For example, when a user desires to watch a film or news through the XR device 100a, the control unit 120 may transmit content request information to another device (e.g., a handheld device 100b) or a media server through the communication unit 130. The communication unit 130 may download/stream content such as films or news from another device (e.g., the handheld device 100b) or the media server to the memory unit 130. The control unit 120 may control and/or perform procedures such as video/image acquisition, (video/image) encoding, and metadata generation/processing with respect to the content and generate and/or output the XR object based on information about a surrounding space or a real object obtained through the I/O unit 140a and/or the sensor unit 140b.

The XR device 100a may be wirelessly connected to the handheld device 100b through the communication unit 110 and the operation of the XR device 100a may be controlled by the handheld device 100b. For example, the handheld device 100b may operate as a controller of the XR device 100a. To this end, the XR device 100a may obtain information about a 3D position of the handheld device 100b and generate and output an XR object corresponding to the handheld device 100b.

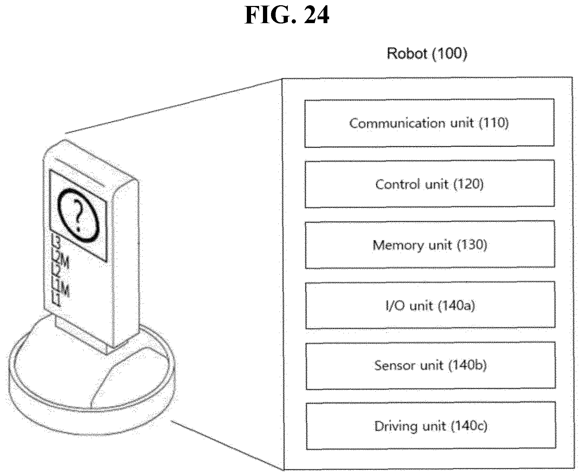

FIG. 24 illustrates a robot applied to the present disclosure. The robot may be categorized into an industrial robot, a medical robot, a household robot, a military robot, etc., according to a purpose of use or a field.

Referring to FIG. 24, a robot 100 may include a communication unit 110, a control unit 120, a memory unit 130, an I/O unit 140a, a sensor unit 140b, and a driving unit 140c. Herein, blocks 110 to 130/140a to 140c correspond to blocks 110 to 130/140 of FIG. 18, respectively.

The communication unit 110 may transmit and receive signals (e.g., driving information and control signals) to and from external devices such as other wireless devices, other robots, or control servers. The control unit 120 may perform various operations by controlling constituent elements of the robot 100. The memory unit 130 may store data/parameters/programs/code/instructions for supporting various functions of the robot 100. The I/O unit 140a may obtain information from the exterior of the robot 100 and output information to the exterior of the robot 100. The I/O unit 140a may include a camera, a microphone, a user input unit, a display unit, a speaker, and/or a haptic module. The sensor unit 140b may obtain internal information of the robot 100, surrounding environment information, user information, etc. The sensor unit 140b may include a proximity sensor, an illumination sensor, an acceleration sensor, a magnetic sensor, a gyro sensor, an inertial sensor, an IR sensor, a fingerprint recognition sensor, an ultrasonic sensor, a light sensor, a microphone, a radar, etc. The driving unit 140c may perform various physical operations such as movement of robot joints. In addition, the driving unit 140c may cause the robot 100 to travel on the road or to fly. The driving unit 140c may include an actuator, a motor, a wheel, a brake, a propeller, etc.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, an embodiment may be configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**Industrial Applicability**

The present disclosure is applicable to UEs, BSs, or other apparatuses in a wireless mobile communication system.

**Claims**

1. A method of a device for operating based on discontinuous reception (DRX) in a wireless communication system, the method comprising:

   receiving DRX-related information including a plurality of offset sets each having 'N' offsets through higher layer signaling;
   monitoring a physical downlink control channel (PDCCH) including scheduling information related to a specific service in each of DRX on-durations included in a specific time duration based on the DRX-related information; and
   receiving or transmitting a signal for data of the specific service based on the scheduling information detected as a result of monitoring the PDCCH,
   wherein a DRX cycle included in the DRX-related information is an integer, and the device determines respective time resources on which the DRX on-durations included in the specific time duration start by applying 'N' offsets of a specific set indicated through signaling different from the higher layer signaling, among the plurality offset sets included in the DRX-related information, to the DRX cycle, and
   wherein the determined time resources on which the DRX on-durations start form a pattern repeated every specific time duration.

2. The method of claim 1, wherein the data of the specific service is periodic data, and
   wherein a periodicity of the periodic data is a rational number other than an integer.

3. The method of claim 1, wherein the higher layer signaling is radio access control (RRC) signaling, and
   wherein information related to the specific set is received through downlink control information (DCI) or medium access control (MAC) signaling.

4. The method of claim 1, wherein 'N' represents the number of time resources on which the DRX on-durations forming the pattern during the specific time duration start.

5. The method of claim 1, wherein 'N' represents the number of the DRX on-durations included in the specific time duration.

6. The method of claim 1, wherein the specific set applied to the DRX cycle is related to at least one of a first offset which is common to the DRX on-durations, or a second offset which is individually configurable for each of the DRX on-durations.

7. The method of claim 2, wherein the specific set applied to the DRX cycle is determined based on the periodicity of the periodic data which is a rational number other than an integer.

8. The method of claim 1, wherein the specific service is an extended reality (XR) service, and
   wherein a periodicity of the data is related to frames per second (fps) of XR data.

9. A computer readable medium recorded thereon a program for performing the method of claim 1.

10. A device for wireless communication, the device comprising:

a memory configured to store instructions; and

a processor configured to perform operations by executing the instructions,

wherein the operations of the processor comprise: receiving discontinuous reception (DRX)-related information including a plurality of offset sets each having 'N' offsets through higher layer signaling; monitoring a physical downlink control channel (PDCCH) including scheduling information related to a specific service in each of DRX on-durations included in a specific time duration based on the DRX-related information; and receiving or transmitting a signal for data of the specific service based on the scheduling information detected as a result of monitoring the PDCCH,

wherein a DRX cycle included in the DRX-related information is an integer, and the processor determines respective time resources on which the DRX on-durations included in the specific time duration start by applying 'N' offsets of a specific set indicated through signaling different from the higher layer signaling, among the plurality offset sets included in the DRX-related information, to the DRX cycle, and

wherein the determined time resources on which the DRX on-durations start form a pattern repeated every specific time duration.

11. The device of claim 10, further comprising a transceiver configured to transmit and receive a radio signal under control of the processor.

12. The device of claim 10, wherein the device is a user equipment (UE) operating in a wireless communication system.

13. A method of a base station to operate in a wireless communication system, the method comprising:

transmitting discontinuous reception (DRX)-related information including a plurality of offset sets each having 'N' offsets through higher layer signaling;

transmitting a physical downlink control channel (PDCCH) including scheduling information related to a specific service in each of DRX on-durations included in a specific time duration based on the DRX-related information; and

transmitting or receiving a signal for data of the specific service based on the scheduling information,

wherein a DRX cycle included in the DRX-related information is an integer, and the base station determines respective time resources on which the DRX on-durations included in the specific time duration start by applying 'N' offsets of a specific set indicated through signaling different from the higher layer signaling, among the plurality offset sets included in the DRX-related information, to the DRX cycle, and

wherein the determined time resources on which the DRX on-durations start form a pattern repeated every specific time duration.

14. A base station for wireless communication, the base station comprising:

a memory configured to store instructions; and

a processor configured to perform operations by executing the instructions,

wherein the operations of the processor comprise: transmitting discontinuous reception (DRX)-related information through higher layer signaling; transmitting a physical downlink control channel (PDCCH) including scheduling information related to a specific service in each of DRX on-durations included in a specific time duration based on the DRX-related information; and transmitting or receiving a signal for data of the specific service based on the scheduling information,

wherein the processor determines respective time resources on which the DRX on-durations included in the specific time duration start by applying 'N' offsets of a specific set indicated through signaling different from the higher layer signaling, among a plurality offset sets included in the DRX-related information, in a state in which i) a DRX cycle included in the DRX-related information is an integer, ii) the data of the specific service is periodic data, and iii) a periodicity of the periodic data is a rational number other than an integer, and

wherein the determined time resources on which the DRX on-durations start form a pattern repeated every specific time duration.

# FIG. 1

| Initial Cell Search | System Information Reception | Random Access Procedure | | | | General DL/UL Tx/Rx S18 | |
|---|---|---|---|---|---|---|---|
| PSS/SSS & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |
| S11 | S12 | S13 | S14 | S15 | S16 | S17 | |

• DL/UL ACK/NACK
• UE CQI/PMI/Rank Report using PUSCH and PUCCH

# FIG. 2

| One Frame (10ms) | |
|---|---|
| Half-Frame (5ms) | Half-Frame (5ms) |

| Subframe 0 (1ms) | Subframe 4 (1ms) | Subframe 5 (1ms) | Subframe 9 (1ms) |

Subframe (1ms)

15KHz | Slot (14 symbols) |
1ms

30KHz | Slot 0 (14 symbols) | Slot 1 |
500us

60KHz | Slot 0 (14 symbols) | Slot 1 | Slot 2 | Slot 3 |
250us

120KHz | Slot 0 (14 symbols) | Slot 1 | Slot 2 | Slot 3 | Slot 4 | Slot 5 | Slot 6 | Slot 7 |
125us

# FIG. 3

# FIG. 4

# FIG. 5

# FIG. 6

DL assingment-to-PDSCH offset (K0)

PDCCH　　　　　PDSCH　　　　　　　　　　PUCCH

← slot →

PDSCH-to-HARQ-ACK reporting offset (K1)

# FIG. 7

UL grant-to-PUSCH offset (K2)

PDCCH　　　　　　　　　　　PUSCH

# FIG. 8

Receive Information regarding service requirements, and Determine DRX operation scheme — FC101

Transmit Configuration for DRX operation — FC102

Transmit PDCCH based on Configuration — FC103

# FIG. 9

Report Information regarding service requirements — FC201

Receive Configuration for DRX operation — FC202

DRX operation based on Configuration
(determine whether to perform PDCCH monitoring) — FC203

**FIG. 10**

# FIG. 11

offset - common : 5 ms

0 ms  1st offset : 0 ms  1 0 ms  2 0 ms  2nd offset : +2ms  3 0 ms  3rd offset : -1ms  4 0 ms  5 0 ms  4th offset : +2ms  6 0 ms  7 0 ms  8 0 ms

DRX cycle : 16 ms

DRX set duration : 50 ms

■ : slot where UE starts on - duration

EP 4 380 299 A1

38

## FIG. 12

offset - common : 5ms

0 ms
10 ms
20 ms
30 ms
40 ms
50 ms
60 ms
70 ms
80 ms

1st DRX cycle : 16 ms
2nd DRX cycle : 17 ms
3rd DRX cycle : 17 ms
DRX set duration : 50 ms

: slot where UE starts on - duration

# FIG. 13

Receive DRX related Information — A1305

PDCCH monitoring on DRX-On Duration — A1310

Receive or Transmit
based on Detected PDCCH — A1315

# FIG. 14

Transmit DRX related Information — A1405

PDCCH transmission on DRX-On Duration — A1410

Transmit or Receive
based on PDCCH — A1415

# FIG. 15

# FIG. 16

# FIG. 17

Device(100, 200)

| Communication unit (110)<br>(e.g., 5G communication unit) | Control unit (120)<br>(e.g., processor(s)) |
|---|---|
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 18

| Vehicle or autonomous driving vehicle (100) | | Device (100, 200) |
|---|---|---|
| Communication unit (110) | | Communication unit (210) |
| Control unit (120) | 108    208 | Control unit (220) |
| Memory unit (130) | | Memory unit (230) |
| Driving unit (140a) | | Driving unit (140a) |
| Power supply unit (140b) | | Power supply unit (140b) |
| Sensor unit (140c) | | Sensor unit (140c) |
| Autonomous driving unit (140d) | | Autonomous driving unit (140d) |

# FIG. 19

*UE shall monitor PDCCH*

*On Duration* — *Opportunity for DRX*

*DRX Cycle*

# FIG. 20

# FIG. 21

# FIG. 22

1410

Vehicle or autonomous driving vehicle (100)

Virtual World

1420

| Communication unit (110) |
|---|
| Control unit (120) |
| Memory unit (130) |
| I/O unit (140a)<br>(e.g., HUD) |
| Positioning unit (140b)<br>(e.g., GPS, sensor) |

# FIG. 23

XR device (100a)

100a

100b

| Communication unit (110) |
|---|
| Control unit (120) |
| Memory unit (130) |
| I/O unit (140a) |
| Sensor unit (140b) |
| Power supply unit (140c) |

# FIG. 24

Robot (100)

| Communication unit (110) |
| Control unit (120) |
| Memory unit (130) |
| I/O unit (140a) |
| Sensor unit (140b) |
| Driving unit (140c) |

## INTERNATIONAL SEARCH REPORT

International application No.

**PCT/KR2022/011015**

**A.    CLASSIFICATION OF SUBJECT MATTER**

**H04W 76/28**(2018.01)i; **H04W 72/04**(2009.01)i; **H04W 72/12**(2009.01)i; **H04W 52/02**(2009.01)i; **H04W 88/02**(2009.01)i

According to International Patent Classification (IPC) or to both national classification and IPC

**B.    FIELDS SEARCHED**

Minimum documentation searched (classification system followed by classification symbols)

H04W 76/28(2018.01); H04B 7/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: DRX(Discontinuous Reception), XR(eXtended Reality), DRX-On duration, DRX 사이클(cycle), 오프셋(offset)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2021-0045406 A (GUANGDONG OPPO MOBILE TELECOMMUNICATIONS CORP., LTD.) 26 April 2021 (2021-04-26)<br>      See paragraphs [0031], [0034]-[0057], [0083]-[0085] and [0116]. | 1-14 |
| Y | QUALCOMM INCORPORATED. Potential Enhancements for XR. R1-2104704, 3GPP TSG RAN WG1 Meeting #105-e, e-Meeting. 12 May 2021.<br>      See section 2.1; and figure 2. | 1-14 |
| A | ZTE et al. Further Discussion on Capacity and Power Working Areas for XR. R1-2105606, 3GPP TSG RAN WG1 Meeting #105-e, e-Meeting. 12 May 2021.<br>      See section 4; and figure 4. | 1-14 |
| A | VIVO. Challenges and potential enhancements of XR. R1-2104398, 3GPP TSG RAN WG1 Meeting #105-e, e-Meeting. 11 May 2021.<br>      See sections 2-3. | 1-14 |
| A | KR 10-2021-0035748 A (SAMSUNG ELECTRONICS CO., LTD.) 01 April 2021 (2021-04-01)<br>      See paragraphs [0054]-[0067]; and figures 1d-1f. | 1-14 |

☐ Further documents are listed in the continuation of Box C.      ☑ See patent family annex.

| | |
|---|---|
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **04 November 2022** | **07 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/011015**

| Patent document cited in search report | | | Publication date (day/month/year) | Patent family member(s) | | | Publication date (day/month/year) |
|---|---|---|---|---|---|---|---|
| KR | 10-2021-0045406 | A | 26 April 2021 | AU | 2018-436721 | A1 | 25 March 2021 |
| | | | | CN | 112534882 | A | 19 March 2021 |
| | | | | EP | 3840483 | A1 | 23 June 2021 |
| | | | | EP | 3840483 | A4 | 25 August 2021 |
| | | | | JP | 2022-501869 | A | 06 January 2022 |
| | | | | TW | 202021391 | A | 01 June 2020 |
| | | | | US | 2021-0176814 | A1 | 10 June 2021 |
| | | | | WO | 2020-034218 | A1 | 20 February 2020 |
| KR | 10-2021-0035748 | A | 01 April 2021 | CN | 114531956 | A | 24 May 2022 |
| | | | | EP | 4017082 | A1 | 22 June 2022 |
| | | | | WO | 2021-060669 | A1 | 01 April 2021 |

Form PCT/ISA/210 (patent family annex) (July 2022)